(19) Europäisches Patentamt / European Patent Office / Office européen des brevets

(11) **EP 2 867 561 B1**

(12) **EUROPEAN PATENT SPECIFICATION**

(45) Date of publication and mention
of the grant of the patent:
**30.08.2017 Bulletin 2017/35**

(21) Application number: **13748377.2**

(22) Date of filing: **26.06.2013**

(51) Int Cl.:
*F16H 61/02* *(2006.01)*          *B60W 30/14* *(2006.01)*
*B60W 30/18* *(2012.01)*

(86) International application number:
**PCT/SE2013/050769**

(87) International publication number:
**WO 2014/003653 (03.01.2014 Gazette 2014/01)**

(54) **TRANSMISSION CONTROL SYSTEM**

ÜBERTRAGUNGSSTEUERUNGSSYSTEM

SYSTÈME DE COMMANDE DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2012 SE 1200388**

(43) Date of publication of application:
**06.05.2015 Bulletin 2015/19**

(60) Divisional application:
**17168579.5
17168580.3**

(73) Proprietor: **Scania CV AB
151 87 Södertälje (SE)**

(72) Inventors:
• **JOHANSSON, Oskar
  112 19 Stockholm (SE)**
• **ÖGREN, Mikael
  151 48 Södertälje (SE)**
• **ROOS, Fredrik
  141 71 Segeltorp (SE)**

(74) Representative: **Scania CV AB
Patents, GP 117kv
151 87 Södertälje (SE)**

(56) References cited:
WO-A1-2011/075065          DE-A1-102008 023 135
DE-A1-102010 030 346      DE-A1-102011 109 039

## Description

### Technical field

The present invention relates to a method for choosing a transmission mode as described in the preamble to patent claim 1 and to a system for choosing a transmission mode as described in the preamble to patent claim 31. The present invention also relates to a computer program and a computer program product which implement the method according to the invention.

### Background

For motor vehicles, such as, for example, cars, trucks and buses, a fuel cost represents a significant expense for the owner or user of the vehicle. For a hauling company, for example, apart from the cost of procurement of the vehicle, the main items of expenditure for the running of a vehicle are constituted by pay to the driver of the vehicle, costs of repairs and maintenance, and fuel for propulsion of the vehicle. The fuel cost can here have a very large impact on profitability for the hauling company. To this end, a number of different systems have been developed in order to reduce fuel consumption, such as, for example, fuel-efficient engines and fuel-saving cruise control devices.

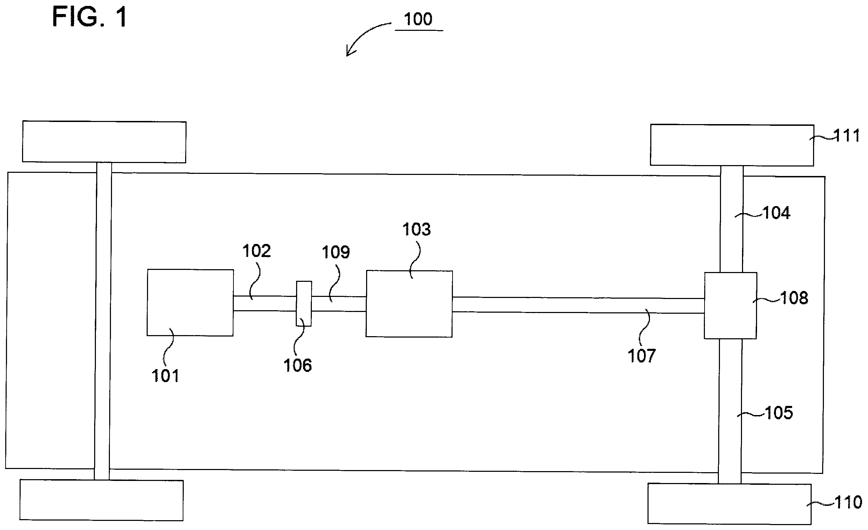

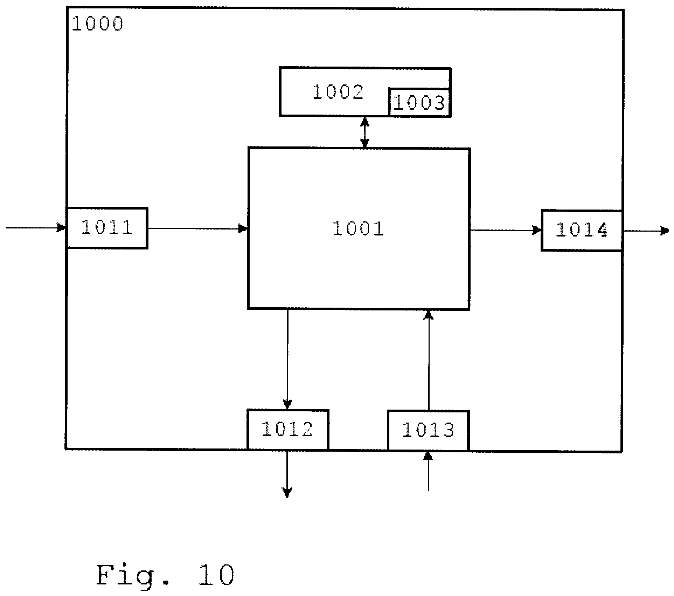

Fig. 1 shows in schematic representation a drive train in a vehicle 100. The drive train comprises an internal combustion engine 101, which is connected in a conventional manner, via an output shaft 102 from the internal combustion engine 101, usually via a flywheel, to an input shaft 109 of a gearbox 103 by means of a clutch 106. The clutch 106 can be constituted, for example, by an automatically controlled clutch, and is controlled by the control system of the vehicle via a control unit 1000 (figure 10). The control unit 1000 can also control the gearbox 103.

The gearbox 103 is here illustrated schematically as a unit. The gearbox 103 can also, however, physically consist of a plurality of interacting gearboxes, for example of a range gearbox, a main gearbox and a split gearbox, which are arranged along the drive train of the vehicle. The gearbox can comprise a suitable number of gear positions. In contemporary gearboxes for heavy duty vehicles are usually found twelve forward gears, two reverse gears and a neutral gear position. If the gearbox 103 physically consists of a plurality of part gearboxes according to the above, these twelve forward gears are distributed amongst two gears in the range gearbox, three gears in the main gearbox and two gears in the split gearbox, which together constitute twelve gear positions (2x3x2=12). The vehicle 100 further comprises drive shafts 104, 105, which are connected to the drive wheels 110, 111 of the vehicle and which are driven by an output shaft 107 from the gearbox 103 via an axle gearing 108, such as, for example, a conventional differential.

The vehicle 100 further comprises a variety of different braking systems, such as a conventional service braking system, which can comprise, for example, brake disks with associated brake linings (not shown) arranged next to each wheel. The engine 101 can be controlled on the basis of instructions from a cruise control device, in order to maintain a constant actual vehicle speed and/or vary the actual vehicle speed so that a fuel consumption which is optimized within reasonable speed limits is obtained. The engine 101 can also be controlled by a driver of the vehicle.

DE102010030346 discloses a method and a system for controlling coasting in a vehicle. If coasting is deemed suitable for a predetermined number of consecutive points ahead of the vehicle, it is activated.

### Brief description of the invention

In descents, for example, or in situations in which the vehicle must reduce its actual speed, fuel savings have historically been made by a reduced request for positive engine torque, alternatively with the aid of dragging. The reduced request for positive engine torque means that the driving force in the direction of travel, which the internal combustion engine delivers via the drive wheels, is reduced, for example by reduced fuel injection in the engine 101, thereby reducing the fuel consumption.

Dragging means driving the vehicle with closed drive train, that is to say with the combustion engine 101 connected to the drive wheels 110, 111 of the vehicle, at the same time as the fuel supply to the internal combustion engine 101 is shut off. One advantage with this type of measure is that, since fuel supply to the internal combustion engine is shut off, the consumption of the internal combustion engine is also equal to zero. The measure also means, however, that the internal combustion engine 101 will be driven by the drive wheels of the vehicle via the drive train, so that so-called "dragging" is achieved, wherein the internal losses of the internal combustion engine give rise to a braking action, that is to say that the vehicle is engine-braked.

Although a reduction in requested engine torque and dragging lowers the fuel consumption, this lowering is not always optimized, firstly since the reduced engine torque, despite everything, generally consumes more fuel than is necessary and secondly since the dragging, moreover, provides an engine braking of the vehicle which is not economical on fuel.
One object of the present invention is to further reduce the fuel consumption of the vehicle.

This object is achieved by the above-stated method according to the characterizing part of patent claim 1. The object is also achieved by the system according to the characterizing part of patent claim 31. The object is also achieved by the above-stated computer program and computer program product. Through the use of the present invention, the object, that is to say of reducing the fuel consumption, is achieved by providing a gear selection which produces as low a revolution speed and as good a fuel economy as possible. When the invention is utilized, coasting can be regarded as part of the gear selection in the vehicle. This provides further scope for achieving a lowering of the revolution speed, which is exploited according to the invention.

Through the use of the present invention, a very exact and well informed choice of transmission mode for use over the course of a road section ahead of the vehicle, where transmission mode comprises coasting as well as gear positions in the gearbox, is obtained. The object of this choice of transmission mode is to bring down the engine speed as far as possible and thus save fuel. One or more simulations of future speed profiles $v_{sim}$ for an actual speed for the vehicle are conducted, which results in the system having very good control over how the vehicle will perform over the course of the road section ahead of the vehicle. Choices regarding coasting and/or gear position can be made, which choices will intuitively feel right for a driver of the vehicle. The extent of use of the function will hereby increase further, whereby fuel-saving coasting and/or upshifts will lower the total fuel consumption.

The present invention can be implemented without much adding to the complexity in the vehicle, since the invention can make use of data which are already available in other systems in the vehicle, such as road slope information to which cruise control devices in the vehicle have access.

According to one embodiment of the present invention, the transmission in the vehicle is controlled such that the speed of the engine is lowered at a moment when this is suitable. The suitability of a transmission mode essentially consists in how long the system considers it possible to utilize the transmission mode without losing too much speed. In the coasting case, suitability is also based on an assessment of whether the vehicle will need to be braked or not over the course of the road section.

According to one embodiment of the present invention, a lower transmission mode is chosen if a downshift or a suspension of coasting is considered necessary. The highest applicable transmission mode which is chosen according to the invention can thus constitute a transmission mode which is lower than a transmission mode which is utilized when the simulation is made.

The present invention can be utilized both in pedal driving, that is to say that the driver himself regulates the requesting of torque from the engine, and in cruise control driving. The term pedal driving here and in this document comprises utilization of essentially all types of control system which are suited to regulating the torque demand, such as, for example, a gas pedal or a manual throttle device.

Brief list of figures

The invention will be illustrated in greater detail below on the basis of the appended drawings, in which identical reference symbols are used for identical parts, and wherein:

figure 1 shows in schematic representation parts of an exemplary vehicle,

figure 2 shows in schematic representation a driving situation,

figure 3 shows a graph representing engine friction as a function of engine speed,

figure 4 shows an example of a simulation according to the invention,

figure 5 shows a flowchart for the method according to the invention,

figure 6 shows an example of a simulation according to the invention,

figure 7 shows an example of a simulation according to the invention,

figure 8 shows an example of a simulation according to the invention,

figure 9 shows an example of a simulation according to the invention, and

figure 10 shows a control unit according to the invention.

**Description of preferred embodiments**

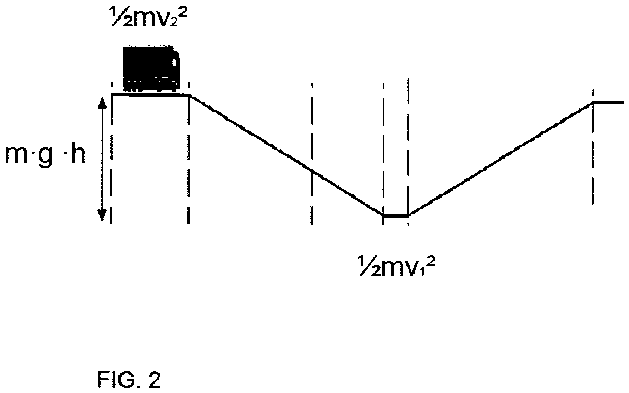

Figure 2 shows in schematic representation an example of a driving situation, a descent, where the present invention can be applied. The invention can also be applied in other driving situations, for example in the event of a reduction in speed, which can occur on a flat road. For pedagogical reasons, however, the driving situation in figure 2 will here be used to describe principles which are utilized by the invention.

For the vehicle in figure 2, an energy relationship can be established for the driving situation:

$$mgh = (\tfrac{1}{2}\mathrm{mv_2}^2 - \tfrac{1}{2}\mathrm{mv_1}^2) + (F_{air} + F_{rr} + F_{eng} + F_{gb} + F_{axle/nav}) \bullet s \quad \texttt{(equation 1)}$$

in which:

- $mgh$ is the potential energy of the vehicle;
- $\tfrac{1}{2}\mathrm{mv}_2^2$ is the kinetic energy of the vehicle up on the top of the hill;
- $\tfrac{1}{2}\mathrm{mv}_1^2$ is the kinetic energy of the vehicle at the bottom of the hill;
- $F_{air}$ is the air resistance of the vehicle;
- $F_{rr}$ is the rolling resistance of the vehicle;
- $F_{eng}$ is the engine friction;
- $F_{gb}$ is the gearbox friction;
- $F_{axle/nav}$ is friction in rear axle, seals and wheel bearings; and
- $s$ is the traveled distance between the top and the bottom of the hill.

As can be seen from equation 1, a number of forces $F_{air}$, $F_{rr}$, $F_{eng}$, $Fg_b$, and $F_{axle/nav}$ act against the motion of the vehicle.

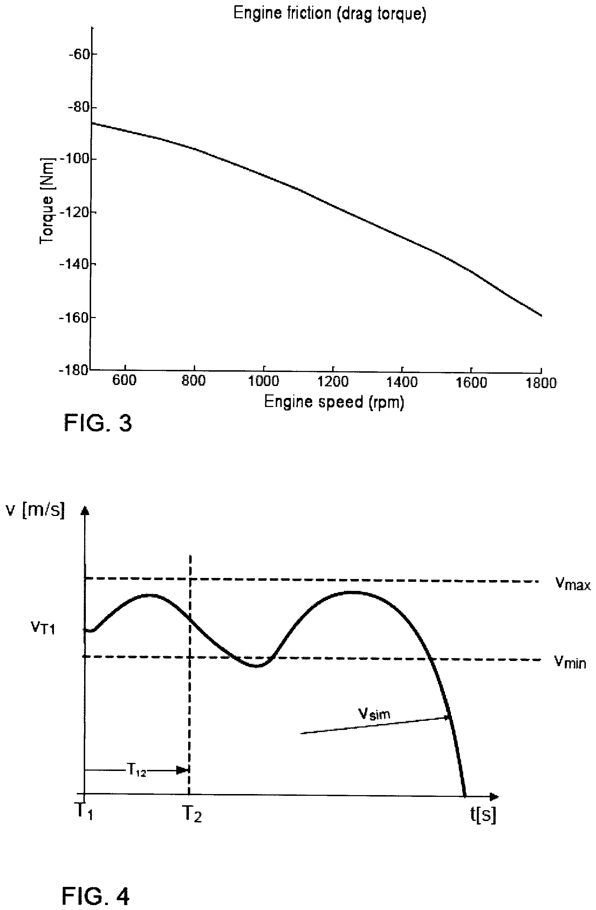

Figure 3 shows an example of engine friction for a truck engine. It can here be seen that the negative torque corresponding to the engine friction $F_{eng}$, which inhibits the motion of the vehicle, increases with increased rotation speed of the engine 101 (note that the y-axis has negative gradation in figure 3). Conversely, reduced rotation speed of the engine gives reduced force for the engine friction $F_{eng}$, that is to say reduced negative torque, which is exploited by the present invention.

According to one embodiment of the present invention, an upshift or coasting is applied by virtue of the fact that the highest applicable transmission mode is chosen if this gives a fuel saving essentially without adversely affecting the driving of the vehicle. In situations, too, where a downshift or a suspension of coasting is deemed necessary, according to one embodiment the transmission mode which is to be utilized after this downshift or this suspension can be chosen by selection of the highest applicable transmission mode. An applicable/appropriate transmission mode is in this document a transmission mode which is usable, while the chosen highest applicable transmission mode constitutes a recommended transmission mode.

In this document, an upshift means that a higher possible gear position in the gearbox 103, in which this higher gear position is physical, that is to say constitutes one of the gears established by the gearbox, is chosen. This higher gear position also means that the engine 101 operates at a lower engine speed.

Coasting means in this document that the engine 101 of the vehicle is disengaged from the drive wheels 110, 111 of the vehicle, i.e. that the drive train is opened. This disengagement of the drive wheels 110, 111 from the engine 101, also referred to as opening of the drive train, can be achieved, for example, by setting the gearbox 103 in a neutral position or by opening the clutch 106. In other words, essentially no force is transmitted from the engine 101 to the drive wheels 110, 111 during the coasting. Disengagement of the engine 101 from the drive wheels 110, 111 of the vehicle 100 when the vehicle 100 is in motion is thus referred to in this document as coasting, and can also be seen as a highest fictitious/imaginary gear position for the drive train. An opening of the clutch and/or the neutral position for the gearbox can thus be seen as a highest fictitious/imaginary gear position for the drive train.

If a coasting through opening of the clutch and/or through engagement of a neutral gear position is considered applicable, the drive train thus has a number of physical gear positions, for example twelve gear positions, implemented in the gearbox 103, as well as at least one extra fictitious gear position, which is higher than the physical gear positions in the gearbox and comprises opening of the clutch and/or engagement of neutral gear position in the gearbox 103.

An upshift according to the present invention causes a reduction in the forces acting against the motion of the vehicle, since the force for the engine friction $F_{eng}$ diminishes with diminishing engine speed, as is also shown in figure 3. An upshift can thus lower the fuel consumption by virtue of reduced resistance against the vehicle.

Coasting according to the present invention causes a considerable reduction in the forces acting against the motion of the vehicle, since the force for the engine friction $F_{eng}$ then diminishes to a value essentially equal to zero (0).

To this end, coasting can considerably lower the fuel consumption by virtue of this reduced resistance against the vehicle. In certain cases of coasting, idling fuel would have to be supplied to the engine, however, to prevent this from stalling, while in other cases the engine can be allowed to stall.

The result is that, from a fuel aspect, it is often more advantageous to drive the vehicle with open drive train, that is to say in coasting mode, than with dragging, that is to say when the drive train is closed at the same time as the fuel supply to the engine 101 is shut off. The reason for this is that the limited quantity of fuel which is required to keep the internal combustion engine running when the internal combustion engine is disengaged is counterbalanced by the fact that the vehicle can continue with disengaged internal combustion engine for a longer distance, for example after a downslope has been negotiated. This is due, inter alia, to the fact that the vehicle will reach a higher speed on, for example, the downslope when driven with disengaged internal combustion engine compared with when the vehicle is driven with closed drive train without fuel supply.

In coasting, moreover, the force which inhibits the driving of the vehicle will be lower when the internal combustion engine of the vehicle is disengaged from the drive shaft, since there is no engine brake force inhibiting the progress of the vehicle. This makes the vehicle decelerate more slowly, for example, when the vehicle reaches the end of the downslope, which in turn means that coasting can often be utilized for a relatively long distance after, for example, an end of a descent. A considerable reduction in fuel consumption is hereby obtained.

According to one embodiment of the present invention, it is determined when, that is to say at what moment, an upshift or a coasting is possible and what effect this upshift or coasting would have on the actual speed profile of the vehicle for a road section.

In order to be able to decide this, one or more future speed profiles $v_{sim}$ for the actual speed of the vehicle for a road section ahead of the vehicle are simulated. Thus the simulation is conducted such that it is based on the current position and situation of the vehicle and looks forward over the road section, wherein the simulation is made on the basis of a road slope for the road section and a transmission mode for the vehicle.

For example, the simulation can be conducted in the vehicle at a predetermined frequency, such as for example at the frequency of 1 Hz, which means that a new simulation result is ready every second. The road section for which the simulation is conducted comprises a predetermined section ahead of the vehicle, in which this, for example, can be 1 km long. The road section can also be seen as a horizon ahead of the vehicle, for which the simulation is to be conducted.

Apart from the above-stated parameters of road slope and transmission mode, the simulation can also be based on one or more of a driving method, a current actual vehicle speed, at least one engine characteristic, such as maximum and/or minimum engine torque, a vehicle weight, an air resistance, a rolling resistance, a gear ratio in the gearbox and/or the drive train, a wheel radius.

The road slope on which the simulations are based can be obtained in a number of different ways. The road slope can be determined on the basis of map data, for example from digital maps comprising topographical information, in combination with positioning information, such as, for example GPS information (Global Positioning System). With the aid of the positioning information, the position of the vehicle in relation to the map data can be established, so that the road slope can be extracted from the map data.

In many present-day cruise control systems, map data and positioning information are utilized in the cruise control. Such systems can then provide map data and positioning information to the system for the present invention, the effect of which is that the added complexity for the determination of the road slope is minimized.

The road slope on which the simulations are based can be obtained by estimating the road slope encountered by the vehicle in the simulation instance. There are many ways of estimating this road slope, for example on the basis of an engine torque in the vehicle, of an acceleration for the vehicle, on an accelerometer, on GPS information, on radar information, on camera information, on information from another vehicle, on positioning information and road slope information stored earlier in the vehicle, or on information obtained from a traffic system related to said road section. In systems in which information exchange between vehicles is utilized, road slope estimated by one vehicle can also be made available to other vehicles, either directly, or via an intermediate unit such as a database or the like.

The simulations are conducted on the basis of an assumption of a transmission mode. As will be described in greater detail below, a transmission mode can comprise, for example, coasting or a gear position for the gearbox 103 in the vehicle, in which the coasting can be achieved, for example, by opening of the clutch 106 or by engagement of a neutral gear. Thus, a future speed profile $v_{sim}$ for the actual speed of the vehicle is simulated, for example, for a specific gear in the gearbox, for an open clutch, or for a neutral gear in the gearbox. More simulations can be conducted in parallel or sequentially, so that simulations for all relevant transmission modes are made before the simulations are evaluated and decisions taken as to which transmission mode shall be used.

For each gear in the gearbox 103 there are parameters related to this gear, such as gear ratio, efficiency and maximally permitted torque. One or more parameters can constitute input data for simulation of the future speed profile $v_{sim}$ for this gear.

Thus, at one moment, one or more future speed profiles $v_{sim}$ for one or more gears in the gearbox, for an open clutch, and/or for neutral gear in the gearbox can be simulated, for example. These one or more future speed profiles

$v_{sim}$ will subsequently be evaluated when decisions are to be taken as to which transmission mode shall be used, as will be described in greater detail below.

According to the present invention, the one or more future speed profiles $v_{sim}$ are compared with a lowest permitted speed $v_{min}$, which an actual speed for the vehicle in a transmission mode should not fall below over the course of the road section. The lowest permitted speed $v_{min}$ is thus different for different transmission modes. The comparison is illustrated in schematic representation in figure 4. If a simulated future speed profile $v_{sim}$ related to a certain transmission mode is greater than the lowest permitted speed $v_{min}$ throughout the first time period $T_{12}$, then this transmission mode is deemed applicable. That a transmission mode is applicable signifies in this document that the transmission mode is considered usable and that this transmission mode shall form one of the transmission modes from which the transmission mode to be subsequently used will be chosen. The first time period $T_{12}$ extends from a first moment $T_1$, which for the algorithm often constitutes a current moment and at which at least one simulation is conducted, to a second, later moment $T_2$. The first time period $T_{12}$ can be different for different gears/transmission modes and can be dynamic and dependent on the vehicle specification.

The second moment $T_2$ is chosen such that the first time period $T_{12}$ corresponds to a smallest/shortest permitted time period for which a gear should be utilized in order to avoid inconsistent gearshift. Inconsistent gearshift here comprises shifts between different gears/transmission modes at relatively high frequency. Thus the first time period $T_{12}$ has a length which ensures that the driver is not subjected to unnecessarily frequent and irritating gearshift. The eagerness for drivers to utilize the system according to the invention hereby increases, since it only deems gears to be applicable if they are suitable throughout the first time period $T_{12}$, that is to say that they can only be deemed applicable if they can be utilized throughout the first time period $T_{12}$, whereby jerky gearshift is avoided.

In the non-limiting example in figure 4 is shown an illustration of a simulated future speed profile $v_{sim}$ which is greater than the lowest permitted speed $v_{min}$ throughout the first time period $T_{12}$, with the result that the transmission mode on which this simulated future speed profile $v_{sim}$ is based will be deemed to be applicable. If, for example, this simulated future speed profile $v_{sim}$ is here based on the transmission mode for the utilization of a twelfth gear in the gearbox 103 then the twelfth gear will thus be deemed to be applicable if the simulated future speed profile $v_{sim}$ has this appearance. Correspondingly, a simulated future speed profile $v_{sim}$ which is based on the transmission mode for opening of the clutch and has this appearance would result in coasting by virtue of an opened clutch being deemed to be applicable, and a simulated future speed profile $v_{sim}$ which is based on the transmission mode for neutral gear and has this appearance would result in coasting with neutral gear being deemed to be applicable.

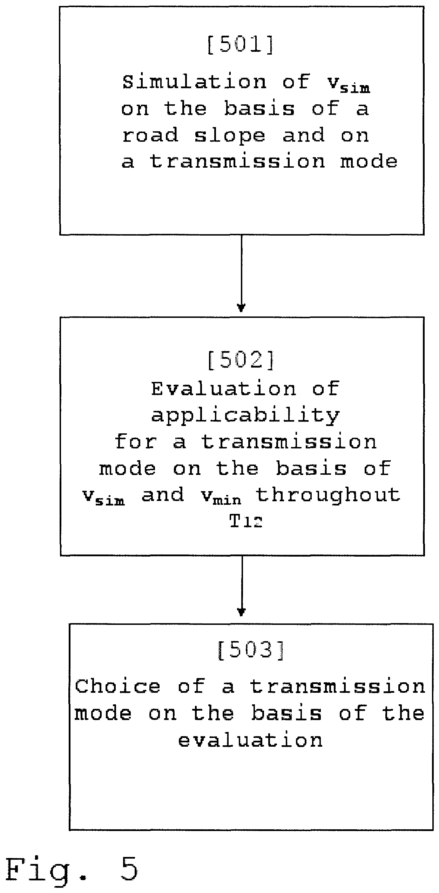

Figure 5 shows a flowchart for the method according to the present invention. In a first step 501 of the method, one or more simulations of future speed profiles $v_{sim}$ are conducted for the road section ahead of the vehicle 100, in which the simulation for each of the at least one future speed profile $v_{sim}$ is based on a road slope and on a transmission mode for the vehicle. As has been described above, one or more simulations for gears in the gearbox 103, for open clutch 106, and/or for neutral gear position in the gearbox 103 can thus here be conducted. According to one embodiment, account is also taken in the simulations of an adopted driving method, in which this driving method can comprise one or more of cruise control driving, driving with drag torque, driving according to an arbitrary torque profile, and gas pedal driving. The simulation can also take account of one or more vehicle parameters, such as, for example, the weight of the vehicle.

In a second step 502 of the method, the applicability of the transmission modes which are related to the at least one simulated future speed profile $v_{sim}$ is evaluated. A transmission mode is here deemed applicable if its related simulated future speed profile $v_{sim}$ is greater than the above described lowest permitted speed $v_{min}$ throughout the first time period $T_{12}$, which extends from the first moment $T_1$, when the simulations are conducted, to the second, later moment $T_2$. The second moment $T_2$ here constitutes a moment such that the first time period $T_{12}$ corresponds to a smallest permitted time period for which a transmission mode should be utilized after the simulation in order that inconsistent gearshift shall be avoided.

In a third step 503 of the method, a transmission mode is then chosen on the basis of the evaluation in the second method step 502. Typically, a transmission mode which has been deemed applicable in the second method step 502 is chosen here. According to one embodiment of the invention, which is described in greater detail below, a transmission mode for coasting, if some such has been deemed to be applicable, is chosen here. Otherwise, a transmission mode for the highest gear position which has been deemed to be applicable is chosen. The choice of the transmission mode to be utilized in the vehicle is made, according to one embodiment, by the control system itself. According to another embodiment, the control system presents the suitable transmission mode to the driver with the aid of a display unit, whereafter the driver has an opportunity to choose whether the presented transmission mode shall be utilized or not.

By, according to the present invention, basing the choice of transmission mode to be utilized in the vehicle 100 on one or more simulations of future speed profiles $v_{sim}$, a factually informed choice of transmission mode can be made. Through the use of the invention, it is also possible to ensure that repeated upshifts and/or downshifts are not made, since the simulations are made over a longer time period. Previously known solutions have been based on the situation at the precise point when decisions have been taken, which has often led to upshifts and/or downshifts having been made in different sequences. Such sequences of upshifts and/or downshifts are perceived as very disturbing by a driver of the vehicle. The present invention thus provides a transmission mode control system which is perceived as continuous and intuitively comprehensible for the driver. Hence the use of the function will increase and thereby reduces a total fuel consumption for the vehicle.

As has been stated above, many different transmission modes are obtainable. According to one embodiment of the invention, a gear position for a gearbox 103 is incorporated in a transmission mode. The evaluation of the transmission mode here therefore comprises an evaluation of whether an upshift to a possibly higher gear position is applicable. A possibly higher gear position can here constitute essentially any gear whatsoever in the gearbox 103 apart from its lowest gear, in which this gear is usable at the actual speed of the vehicle and/or at an actual requested engine torque. However, the invention is especially applicable for the higher gears in the gearbox 103, and especially its highest gear, for example a twelfth gear if the gearbox 103 has a total of twelve gears for the forward drive of the vehicle 100. Here at least one simulation of a future speed profile $v_{sim}$ for at least one gear in the gearbox 103 is thus conducted, which simulation is then evaluated in order to decide whether each of these future speed profiles $v_{sim}$ are applicable or not. According to one embodiment, of the gears which have been deemed to be applicable, that which has the lowest engine speed is then chosen. In other words, the transmission mode is chosen for the highest gear which has been deemed to be applicable in the evaluation.

According to one embodiment of the invention, coasting is incorporated in one or more transmission modes. The evaluation therefore here comprises an evaluation of whether coasting is applicable or not, in which the engine of the vehicle is assumed to be idling during the coasting. For coasting, the one or more simulated future speed profiles $v_{sim}$, apart from being compared with the lowest permitted speed $v_{min}$, shall also be compared with a highest permitted speed $v_{max}$, which an actual speed for a vehicle 100 should not exceed. By comparing the simulated future speed profiles $v_{sim}$ with the highest permitted speed $v_{max}$, transmission modes in which the future speed profiles $v_{sim}$ exceed the highest permitted speed $v_{max}$ can be dropped, whereby the risk of the vehicle, in a descent, for example, coasting into such a high speed that the vehicle has to be braked is avoided. It is uneconomical from a fuel perspective to brake the vehicle, since kinetic energy is then wasted. If the vehicle has nevertheless to be braked, it is most effective to utilize an engine brake, that is to say to drag the engine. Engine braking by dragging of the engine consumes more fuel than coasting, and braking with a braking system converts kinetic energy into heat for the most part, so that none of these alternatives are desirable if the fuel consumption is to be minimized.

For the future speed profile $v_{sim}$ which is shown in figure 4, coasting would thus be deemed to be applicable, since the speed profile $v_{sim}$ is less than the highest permitted speed $v_{max}$ throughout the road section.

According to one embodiment of the present invention, a transmission mode for coasting comprises a state for the clutch 106. The evaluation of this transmission mode in this case comprises an evaluation of whether coasting by opening of the clutch 106 is deemed to be applicable. Hence coasting can thus be achieved by an open clutch if this is considered applicable. Opening the clutch 106 can also be seen as a fictitious/imaginary highest gear for the drive train. The choice of an open clutch can then be seen as selection of the gear which gives the lowest speed for the engine 101.

According to one embodiment of the invention, a transmission mode for coasting comprises a neutral gear position for the gearbox 103. The evaluation of this transmission mode in this case comprises an evaluation of whether coasting by a gearshift into this neutral gear position is deemed to be applicable. Hence coasting can thus be achieved by a neutral gear if this is considered applicable. Utilization of the neutral gear position can also be seen as a fictitious highest gear for the gearbox 103. The choice of neutral gear position can then be seen as selection of the gear which gives the lowest speed for the engine 101.

According to one embodiment, only one of the types of coasting is evaluated for a specific vehicle. For a specific vehicle, only one of open clutch and neutral gear position will then be evaluated.

By virtue of these embodiments, a very fuel-efficient driving of the vehicle can thus be achieved by utilization of an open clutch or neutral gear position if this is suitable for the road section ahead of the vehicle.

When coasting is to be evaluated, the at least one simulated future speed profile $v_{sim}$ comprises a simulated future speed profile $v_{sim-coast}$ related to coasting, wherein the evaluation comprises a comparison of the simulated future speed profile $v_{sim\_coast}$ for coasting with the highest permitted speed $v_{max}$ in a manner such as has been described above. If the simulated future speed profile $v_{sim-coast}$ for coasting is less than the highest permitted speed $v_{max}$ throughout the first time period $T_{12}$, as it is in the non-limiting example in figure 4, coasting is deemed an applicable transmission mode.

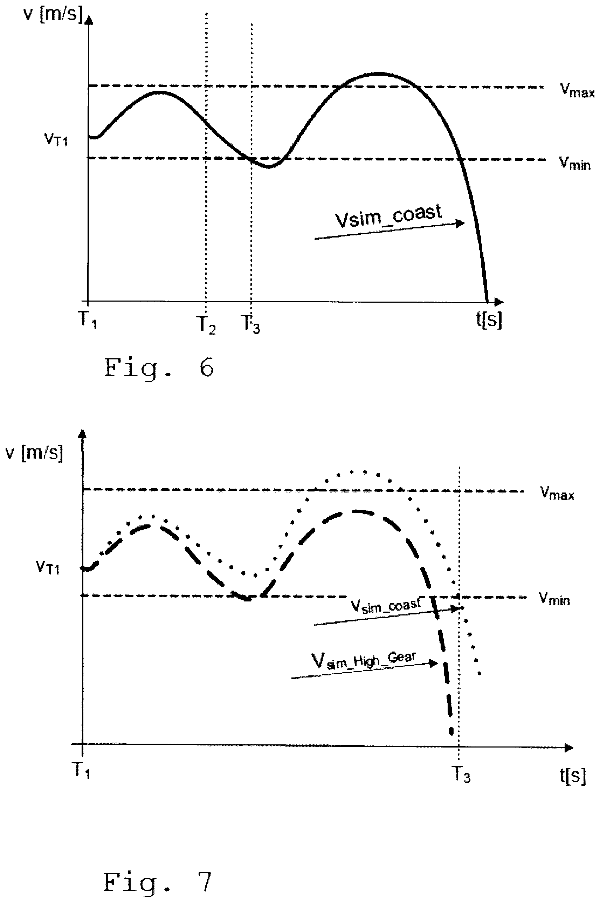

Figure 6 shows in schematic representation a non-limiting example of an embodiment of the present invention. The at least one simulated future speed profile $v_{sim}$ here comprises the simulated future speed profile $v_{sim\_coast}$ for coasting and the evaluation compares the simulated future speed profile $v_{sim\_coast}$ for coasting with the highest permitted speed $v_{max}$. According to the embodiment, coasting is deemed applicable if the simulated future speed profile $v_{sim\_coast}$ for coasting is less than the highest permitted speed $v_{max}$ throughout the second time period $T_{13}$. This second time period $T_{13}$ is longer than the first time period $T_{12}$ and extends from the first moment $T_1$ to a third moment $T_3$. The third moment $T_3$ is here related to the moment when the simulated speed profile $v_{sim\_coast}$ for coasting falls below the lowest permitted speed $v_{min}$, that is to say when the simulated speed profile $v_{sim\_coast}$ for coasting crosses the lowest permitted

speed $v_{min}$. If the simulated future speed profile $v_{sim-coast}$ for coasting does not cross the lowest permitted speed $v_{min}$ over the course of the road section, the third moment $T_3$ is set to a moment which corresponds to the end of the road section. In the example shown in figure 6, the transmission mode for coasting would thus be deemed applicable.

Figure 7 shows in schematic representation a non-limiting example of an embodiment of the present invention. Here the at least one simulated future speed profile $v_{sim}$ comprises a simulated future speed profile $v_{sim\_coast}$ related to coasting. The evaluation here comprises a comparison of a simulated future speed profile $v_{sim\_HighGear}$ related to a highest possible gear position for the gearbox 103 with the highest permitted speed $v_{max}$. The speed profile $v_{sim\_HighGear}$ for the highest possible gear position can here be related to essentially any one whatsoever of the higher gears in the gearbox 103, for example the highest gear of the gearbox.

The second time period $T_{13}$ is here defined as has been described above, i.e. as longer than the first time period $T_{12}$ and as running from the first moment $T_1$ to the third moment $T_3$ when the speed profile $v_{sim-coast}$ for coasting falls below the lowest permitted speed $v_{min}$, alternatively when the road section ends if the speed profile $v_{sim\_coast}$ does not cross the lowest permitted speed $v_{min}$ over the course of the road section. According to the embodiment, the evaluation is based on the future speed profile $v_{sim\_HighGear}$ for the highest possible gear position by virtue of the fact that coasting is deemed applicable if the future speed profile $v_{sim-HighGear}$ for the highest possible gear position is less than the highest permitted speed $v_{max}$ throughout the second time period $T_{13}$. If the future speed profile $v_{sim-HighGear}$ for the highest possible gear position is less than the highest permitted speed $v_{max}$ throughout the second time period $T_{13}$, it means that there is scope for coasting at least for a time, which this embodiment exploits. The result is that the time for which coasting can be utilized is prolonged as much as possible, which is advantageous as it lowers the total fuel consumption of the vehicle. If the future speed profile $v_{sim-HighGear}$ for the highest possible gear position exceeds the highest permitted speed $v_{max}$ in a later simulation, it is an indication that coasting can no longer be utilized.

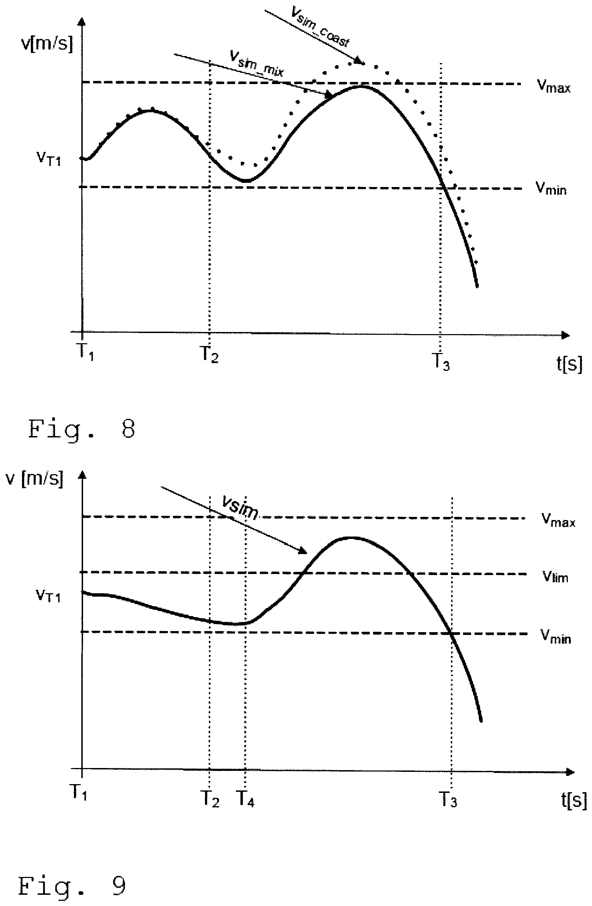

Figure 8 shows in schematic representation a non-limiting example of an embodiment of the present invention. Here, the at least one simulated future speed profile $v_{sim}$ comprises a simulated future combined speed profile $v_{sim\_mix}$, which is made up of a simulation related to coasting during the first time period $T_{12}$ and, thereafter, a simulation over the rest of the road section, which is related to a highest possible gear position.

According to the embodiment, the evaluation comprises a comparison of the simulated combined speed profile $v_{sim\_mix}$ with the highest permitted speed $v_{max}$, wherein coasting is deemed applicable if the simulated future combined speed profile $v_{sim\_mix}$ is less than the highest permitted speed $v_{max}$ throughout the second time period $T_{13}$, which is longer than the first time period $T_{12}$ and extends from the first moment $T_1$ to the third moment $T_3$. According to the embodiment, the third moment $T_3$ is when the simulated combined speed profile $v_{sim\_mix}$ falls below the lowest permitted speed $v_{min}$, or when the road section ends if the speed profile $v_{sim\_mix}$ does not cross the lowest permitted speed $v_{min}$ over the course of the road section. In the example shown in figure 8, coasting would thus be deemed to be applicable.

Through the use of the combined speed profile $v_{sim\_mix}$ in the evaluation, a better prediction of the coming course of events is obtained, since this combined speed profile $v_{sim\_mix}$ corresponds to a likely real appearance of the actual speed $v_{act}$ of the vehicle over the course of the road section. This corresponds to sequences of upshifts and/or downshifts which can be perceived as irritating for the driver. Moreover, the embodiment can be even more computing efficient than the embodiments which utilize two simulations, for example the above-stated embodiment which utilizes the simulated future speed profile $v_{sim\_HighGear}$ related to the highest possible gear position, since only one simulation is required here.

Figure 9 shows in schematic representation a non-limiting example of an embodiment of the present invention. According to this embodiment, a further lowest permitted speed $v_{lim}$, which is higher than, that is to say has a greater value than, the above-defined lowest permitted speed $v_{min}$, is introduced.

According to the embodiment, in the evaluation of the transmission mode, the at least one simulated future speed profile $v_{sim}$ is compared with this further lowest permitted speed $v_{lim}$. A transmission mode is here deemed applicable if a highest value $v_{sim\_max}$ for the speed profile $v_{sim}$ exceeds the further lowest permitted speed $v_{lim}$ at least once during a third time period $T_{43}$

The third time period $T_{43}$ extends from a fourth moment $T_4$ to the third moment $T_3$, in which the speed profile $v_{sim}$ falls below the lowest permitted speed $v_{min}$ at the third moment $T_3$. The fourth moment $T_4$ has different values for different embodiments of the invention. According to one embodiment, the fourth moment $T_4$ corresponds to the first moment $T_1$, $T_4 = T_1$, wherein the third time period $T_{43}$ corresponds to the second time period $T_{13}$, $T_{43} = T_{13}$. According to one embodiment, the fourth moment $T_4$ corresponds to a moment when the derivative for the speed profile $v_{sim}$, for the first time over the course of the road section, is positive, as is exemplified in figure 9. According to one embodiment, the fourth moment $T_4$ corresponds to a moment a predetermined time $T_X$ after the first moment $T_1$, $T_4 = T_1 + T_X$.

The utilization of this further lowest permitted speed $v_{lim}$ in the evaluation imposes a further limitation on when coasting and/or a gear position are applicable, which gives an even more exact prediction of the coasting and/or the gear position. Moreover, a stricter demarcation of the third time period $T_{43}$ when the speed profile $v_{sim}$ shall exceed the further lowest permitted speed $v_{lim}$ increases the chances that the actual speed for the vehicle will be concluded with an overspeed, for example an overspeed relative to a set speed $v_{set}$ for a cruise control or an original actual vehicle speed.

According to various embodiments, the utilization of this further lowest permitted speed $v_{lim}$ in the evaluation can be applied in comparisons with all simulated future speed profiles $v_{sim}$ described in this document, such as for the simulated speed profile $v_{sim\_coast}$ for coasting, for the simulated speed profile $v_{sim-HighGear}$ for the highest possible gear position, and for the simulated future combined speed profile $V_{sim\_mix}$.

After the one or more different transmission modes have been evaluated for the road section, one of these shall be chosen for use in the vehicle. According to one embodiment of the invention, a transmission mode for coasting is in this case chosen if any one transmission mode for coasting has been deemed to be applicable. If no transmission mode for coasting has been deemed to be applicable, but one or more transmission modes for gear positions have been deemed to be applicable, a transmission mode for the highest of these applicable gear positions is chosen. As has been described above, the transmission modes for coasting can be seen as fictitious highest gear positions for the gearbox and/or the drive train, wherein the choice of transmission mode can be seen as a choice of the highest gear position which has been deemed applicable.

According to one embodiment of the invention, one of the ways of achieving coasting is analyzed for each vehicle. However, different ways of achieving coasting can be analyzed for different vehicles.

According to one embodiment, the magnitude of the lowest permitted speed $v_{min}$, that is to say the level of the lowest permitted speed $v_{min}$, is related to a current actual speed $v_{act}$ for the vehicle. According to one embodiment, the magnitude of the highest permitted speed $v_{max}$ is related to a downhill speed control velocity $v_{dhsc}$ for the vehicle.

The lowest permitted speed $v_{min}$ and/or the highest permitted speed $v_{max}$ can be altered dynamically and can have different values for different transmission modes.

According to one embodiment, the magnitude of the lowest permitted speed $v_{min}$ can be determined at least partially on the basis of information related to a cruise control system in said vehicle, for example on the basis of a set speed $v_{set}$, that is to say a driver-selected speed, for a cruise control system, or on the basis of a reference speed $v_{ref}$, which is utilized by said cruise control system to control a speed regulator. The determination of the lowest permitted speed $v_{min}$ can also be carried out by the cruise control system and made available to the system for the present invention.

According to one embodiment of the present invention, the system according to the present invention is integrated at least partially with cruise control logic of a cruise control system in the vehicle. The lowest permitted speed $v_{min}$ can then be controlled by the cruise control logic of the vehicle. For example, an intelligent cruise control lowers the vehicle speed in advance of descents, since the vehicle will anyway accelerate during the descent. According to this embodiment, the cruise control can also initiate a lowering of the lowest permitted speed $v_{min}$ and thereby prolong the time in coasting mode and/or in the highest possible gear for the vehicle. This lowering of the lowest permitted speed $v_{min}$ can be achieved, for example, if the lowest permitted speed $v_{min}$ is related to the reference speed $v_{ref}$, which is the target value which is lowered by the cruise control in the face of descents, wherein the regulation of the lowest permitted speed $v_{min}$ is obtained automatically. For example, the lowest permitted speed $v_{min}$ can constitute a percentage of the reference speed $v_{ref}$.

The speed limit values which are utilized by the present invention, that is to say the lowest permitted speed $v_{min}$, the highest permitted speed $v_{max}$ and the further lowest permitted speed $v_{lim}$, can generally be determined on the basis of a number of different methods. For example, these limit values can be fed in by the driver, constitute a percentage of an actual speed $v_{act}$ for the vehicle, constitute a percentage of a set speed $v_{set}$ for a cruise control system in the vehicle and/or be based on historical driving of the vehicle. The historical driving can be taken into account, for example, through the use of an adaptive algorithm which is updated during the progress of the vehicle.

As a non-limiting example it can be cited that the following values could be utilized for the speed limit values in this document:

- $v_{min}$ = 82 km/h or $v_{min}$ = 0.98 x $v_{set}$ km/h;

- $v_{max}$ = 90 km/h or $v_{max}$ = 1.06 x $V_{set}$ km/h, or $v_{max}$ = 0.995 x $v_{dhsc}$ km/h; and

- $v_{lim}$ = 85 km/h or $v_{min}$ = 1 x $V_{set}$ km/h.

As a non-limiting example it can be cited that the first time period $T_{12}$ could have the length $T_{12}$ = 10 seconds.

As has been described above, road slope can be determined on the basis of map data and positioning information. If such data are not available, the simulations can be based on estimates of the road slope encountered by the vehicle in the simulation instance. This places greater demands on the magnitude of the lowest permitted speed $v_{min}$, the highest permitted speed $v_{max}$, and/or the further lowest permitted speed $v_{lim}$, since the simulations are less exact and more divergent in magnitude. Moreover, according to one embodiment of the invention, the length of the horizon, that is to say the road section, can be shortened in order to counter these variations.

When the road slope for the road section is approximated with the road slope encountered by the vehicle in the simulation itself, an optimal result will be obtained in the case of a gentle descent. Gentle descents are ideal for coasting if the road slope, for example, is such that the simulated speed $v_{sim}$ lies within its permitted range, between the lowest permitted speed $v_{min}$ and the highest permitted speed $v_{max}$.

One advantage of simulating future speed profiles on the basis of current slope is that the same algorithm can be used both for roads and vehicles in which there is no access to future road slope and for roads and vehicles in which there is access to future road slope. Moreover, the simulation makes use of speed-dependent terms, such as, for example, air resistance and engine torque, so that a good estimate of how the vehicle will behave from this point forward is obtained even without knowledge of the future road slope.

According to one embodiment of the present invention, the control system of the transmission comprises a return to a lower gear position and/or return from coasting if one or more of the conditions are met from within the group:

- activation of a braking system in said vehicle;

- fall to below a threshold value for an air pressure in a braking system in said vehicle;

- depression, above a threshold value, of a gas pedal in said vehicle;

- exceeding of a threshold value for a requested engine torque in said vehicle;

- exceeding of a threshold valve for an actual vehicle speed;

- fall to below a threshold value for an actual vehicle speed;

- fall to below a threshold value for simulated remaining time till downshift;

- fall to below a threshold value for simulated remaining time till suspension of coasting;

- requesting of drag torque by a cruise control in said vehicle;

- engine failure for an engine in said vehicle;

- said lower gear position causes a highest permitted speed $v_{max}$ for the road section to be exceeded; and

- a time period $T_{app1}$ for which a current transmission mode is considered applicable is shorter than a threshold period $T_{lim}$.

The person skilled in the art will appreciate that a method for choosing a transmission mode according to the present invention can also be implemented in a computer program, which, when it is executed in a computer, instructs the computer to execute the method. The computer program is usually constituted by a computer program product 1003 stored on a digital storage medium, in which the computer program is incorporated in the computer-readable medium of the computer program product. Said computer-readable medium consists of a suitable memory, such as, for example: ROM (Read-Only Memory), PROM (Programmable Read-Only Memory), EPROM (Erasable PROM), Flash memory, EEPROM (Electrically Erasable PROM), a hard disk unit, etc.

Figure 10 shows in schematic representation a control unit 1000. The control unit 1000 comprises a computing unit 1001, which can be constituted by essentially any suitable type of processor or microcomputer, for example a circuit for digital signal processing (Digital Signal Processor, DSP), or a circuit having a predetermined specific function (Application Specific Integrated Circuit, ASIC). The computing unit 1001 is connected to a memory unit 1002 arranged in the control unit 1000, which memory unit provides the computing unit 1001 with, for example, the stored program code and/or the stored data which the computing unit 1001 requires to be able to perform computations. The computing unit 1001 is also arranged to store partial or final results of computations in the memory unit 1002.

In addition, the control unit 1000 is provided with devices 1011, 1012, 1013, 1014 for receiving and transmitting input and output signals. These input and output signals can contain waveforms, impulses, or other attributes which, by the devices 1011, 1013 for the reception of input signals, can be detected as information and can be converted into signals which can be processed by the computing unit 1001. These signals are then made available to the computing unit 1001. The devices 1012, 1014 for the transmission of output signals are arranged to convert signals received from the computing unit 1001 in order to create output signals by, for example, modulating the signals, which can be transmitted to other parts of and/or systems in the vehicle.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; or by a wireless connection. A person skilled in the art will appreciate that the above-stated computer can be constituted by the computing unit 1001 and that the above-stated memory can be constituted by the memory unit 1002.

Control systems in modern vehicles commonly consist of communication bus systems consisting of one or more communication buses for linking a number of electronic control units (ECU's), or controllers, and various components located on the vehicle. Such a control system can comprise a large number of control units and the responsibility for a specific function can be divided amongst more than one control unit. Vehicles of the shown type thus often comprise significantly more control units than are shown in figure 10, which is well known to the person skilled in the art within the technical field.

In the shown embodiment, the present invention is implemented in the control unit 1000. The invention can also, however, be implemented wholly or partially in one or more other control units already present in the vehicle, or in some control unit dedicated to the present invention.

According to one aspect of the invention, a system for choosing a transmission mode in a vehicle is provided, in which the system comprises a simulation unit, arranged to simulate at least one future speed profile $v_{sim}$ for an actual speed for the vehicle over the course of the road section. The simulation unit is designed to conduct simulation when the road section lies ahead of the vehicle and to base the simulation of each of the at least one future speed profiles $v_{sim}$ on a road slope and on a transmission mode for said vehicle.

The system also comprises an evaluation unit, which is arranged to evaluate an applicability of a transmission mode, wherein the transmission mode for each of the at least one simulated future speed profiles $v_{sim}$ is deemed applicable if each of the at least one simulated future speed profiles $v_{sim}$ is greater than the lowest permitted speed $v_{min}$ throughout the first time period $T_{12}$, which extends from a first moment $T_1$, when the at least one simulation is conducted, to a second, later moment $T_2$. The second moment $T_2$ constitutes a moment such that the first time period $T_{12}$ corresponds to a smallest permitted time period for which a transmission mode should be utilized after the simulation in order that inconsistent gearshift shall be avoided. The system also comprises a utilization unit, which is arranged to utilize the evaluation conducted by the evaluation unit in order to choose a transmission mode for the vehicle.

According to one embodiment of the invention, the transmission mode to be used by the vehicle is chosen by the control system.

According to another embodiment of the invention, which is directed toward providing the driver of the vehicle with information to support decision making when driving the vehicle, the utilization unit comprises a display unit. This display unit is arranged to present a transmission mode for coasting if coasting has been deemed to be applicable, and otherwise a transmission mode for the highest gear position which has been deemed to be applicable. The decision as to which transmission mode shall be used by the driver is thus taken here.

The display unit is preferably arranged integrated with, or adjacent to, a user interface in the vehicle, with the result that the display of a suitable transmission mode for use is clearly visible to the driver.

The display of the indicators can have a number of different designs. For example, the display is constituted by one or more of indicators for transmission modes, such as signs, numerals, letters, symbols, patterns, figures, colors, animations, and sound.

The system, that is to say the simulation unit, the evaluation unit, the utilization unit, and for certain embodiments the display unit, is designed to be able to realize all the above-described embodiments of the method according to the present invention.

The person skilled in the art will appreciate, of course, that speeds and speed limit values which have been quoted in this document have equivalences and can be translated into revolution speeds and revolution speed limit values or torque and torque limit values. Likewise, the person skilled in the art will appreciate that there is a very well-known correlation between distances, times and speeds, so that the herein quoted times and time periods have equivalences in positions and distances.

The person skilled in the art will also appreciate that the system above can be modified according to the different embodiments of the method according to the invention. The invention additionally relates to a motor vehicle 100, for example a truck or a bus, comprising at least one system for choosing a transmission mode according to the invention.

The present invention is not limited to the above-described embodiments of the invention but relates to and comprises all embodiments within the scope of the appended independent claims.

## Claims

1. A method for choosing a transmission mode in a vehicle (100) over the course of a road section, wherein a lowest permitted speed $v_{min}$, which an actual speed for said vehicle (100) should exceed, is defined for said road section; the method comprising:

- simulation of at least one future speed profile $v_{sim}$ for an actual speed for said vehicle (100) over the course of said road section, in which said simulation is conducted when said road section lies ahead of said vehicle (100) and in which said simulation of each of said at least one future speed profile $v_{sim}$ is based on a road slope and on a transmission mode for said vehicle;

- evaluation of an applicability for a transmission mode, wherein said transmission mode for the respective said at least one future speed profile $v_{sim}$ is deemed applicable if the respective said at least one future speed profile $v_{sim}$ is greater than said lowest permitted speed $v_{min}$ throughout a first time period $T_{12}$, which extends from a first moment $T_1$, when said at least one simulation is conducted, to a second, later moment $T_2$, wherein said second moment $T_2$ constitutes a moment such that said first time period $T_{12}$ corresponds to a smallest permitted time period for which a transmission mode should be utilized after said simulation; and

- utilization of said evaluation in said choice of a transmission mode, wherein

- said evaluated transmission mode comprises coasting of said vehicle (100); and

- said evaluation comprises a comparison of said at least one future speed profile $v_{sim}$ with a highest permitted speed $v_{max}$, below which an actual speed for said vehicle (100) should be kept

**characterized in that**

- said at least one future speed profile $v_{sim}$ comprises a simulated future speed profile $v_{sim\_coast}$ related to coasting; and

- said evaluation comprises a comparison of a simulated future speed profile $v_{sim\_HighGear}$ related to a highest possible gear position for a gearbox (103) in said vehicle (100) with said highest permitted speed $v_{max}$; and

- coasting is deemed applicable if said future speed profile $v_{sim\_HighGear}$ related to a highest possible gear position is less than said highest permitted speed $v_{max}$ throughout a second time period $T_{13}$, in which said second time period $T_{13}$ is longer than said first time period $T_{12}$ and extends from said first moment $T_1$ to a third moment $T_3$, when said future speed profile $v_{sim\_coast}$ related to coasting falls below said lowest permitted speed $v_{min}$.

2.  The method as claimed in patent claim 1, wherein

- said transmission mode for coasting comprises a state for a clutch (106) in said vehicle (100); and

- said evaluation of said transmission mode comprises an evaluation of whether coasting by an opening of said clutch (106) is deemed to be applicable.

3.  The method as claimed in patent claim 1, wherein

- said transmission mode for coasting comprises a neutral gear position for a gearbox (103) in said vehicle (100); and

- said evaluation of said transmission mode comprises an evaluation of whether coasting by a gearshift into said neutral gear position is deemed to be applicable.

4.  The method as claimed in one of patent claims 1-3, wherein

- said at least one future speed profile $v_{sim}$ comprises a simulated future speed profile $v_{sim-coast}$ related to coasting;

- said evaluation comprises a comparison of said future speed profile $v_{sim\_coast}$ related to coasting with said highest permitted speed $v_{max}$; and

- coasting is deemed applicable if said future speed profile $v_{sim\_coast}$ related to coasting is less than said highest permitted speed $v_{max}$ throughout said first time period $T_{12}$.

5.  The method as claimed in any one of patent claims 1-3, wherein

- said at least one future speed profile $v_{sim}$ comprises a simulated future speed profile $v_{sim\_coast}$ related to coasting;

- said evaluation comprises a comparison of said future speed profile $v_{sim-coast}$ related to coasting with said highest permitted speed $v_{max}$; and

- coasting is deemed applicable if said future speed profile $v_{sim\_coast}$ related to coasting is less than said highest permitted speed $v_{max}$ throughout a second time period $T_{13}$, in which said second time period $T_{13}$ is longer than said first time period $T_{12}$ and extends from said first moment $T_1$ to a third moment $T_3$, when said future speed profile $v_{sim\_coast}$ related to coasting falls below said lowest permitted speed $v_{min}$.

**6.** The method as claimed in any one of patent claims 1-3, wherein

- said at least one future speed profile $v_{sim}$ comprises a simulated future combined speed profile $v_{sim\_mix}$; and
- said evaluation comprises a comparison of said future combined speed profile $v_{sim\_mix}$ with said highest permitted speed $v_{max}$, in which said future combined speed profile $v_{sim\_mix}$ is simulated on the basis of coasting during said first time period $T_{12}$ and thereafter is simulated on the basis of a highest possible gear position for a remnant of said road section; and
- coasting is deemed applicable if said future combined speed profile $v_{sim\_mix}$ is less than said highest permitted speed $v_{max}$ throughout a second time period $T_{13}$, in which said second time period $T_{13}$ is longer than said first time period $T_{12}$ and extends from said first moment $T_1$ to a third moment $T_3$, when said future combined speed profile $v_{sim\_mix}$ falls below said lowest permitted speed $v_{min}$.

**7.** The method as claimed in any one of patent claims 5-6, wherein said third moment $T_3$ corresponds to an end of said road section if said future speed profile $v_{sim}$ is greater than said lowest permitted speed $v_{min}$ throughout the road section.

**8.** The method as claimed in any one of patent claims 1-7, wherein a magnitude for said highest permitted speed $v_{max}$ is related to a downhill speed control velocity $v_{dhsc}$ for said vehicle (100).

**9.** The method as claimed in any one of patent claims 1-8, wherein a magnitude for said highest permitted speed $v_{max}$ is altered dynamically.

**10.** The method as claimed in any one of patent claims 1-9, wherein a magnitude for said highest permitted speed $v_{max}$ has different values for different transmission modes.

**11.** The method as claimed in patent claim 1, wherein

- said evaluated transmission mode comprises a gear position for a gearbox (103) in said vehicle (100); and
- said evaluation of said transmission mode comprises an evaluation of whether said transmission mode is deemed to be applicable.

**12.** The method as claimed in patent claim 11, wherein said evaluation of said transmission mode constitutes an evaluation of which transmission mode can be chosen from within the group:

- an upshift;
- a downshift; and
- a suspension of a coasting.

**13.** The method as claimed in any one of patent claims 1-12, wherein

- said evaluation comprises a comparison of said at least one future speed profile $v_{sim}$ with a further lowest permitted speed $v_{lim}$, in which said further lowest permitted speed $v_{lim}$ is higher than said lowest permitted speed $v_{min}$; and
- a transmission mode is deemed applicable if a highest value $v_{sim\_max}$ for said future speed profile exceeds said further lowest permitted speed $v_{lim}$ during a third time period $T_{43}$, in which said third time period $T_{43}$ extends from a fourth moment $T_4$ to a third moment $T_3$, when said future speed profile $v_{sim}$ falls below said lowest permitted speed $v_{min}$, wherein said fourth moment $T_4$ corresponds to a moment from within the group:
- said first moment $T_1$;
- a predetermined time after said first moment $T_1$; and
- a moment when a derivative for said future speed profile $v_{sim}$ for the first time is positive.

**14.** The method as claimed in any one of patent claims 1-13, wherein said choice of a transmission mode is realized by a control unit (700) in said vehicle choosing:

- a transmission mode for coasting if coasting has been deemed to be applicable; and otherwise
- a transmission mode for the highest gear position which has been deemed to be applicable.

**15.** The method as claimed in any one of patent claims 1-13, wherein said choice of a transmission mode comprises a control unit (700) in said vehicle choosing to present to a driver of said vehicle (100):

- a transmission mode for coasting if coasting has been deemed to be applicable; and otherwise
- a transmission mode for the highest gear position which has been deemed to be applicable.

16. The method as claimed in any one of patent claims 1-15, wherein a magnitude for said lowest permitted speed $v_{min}$ is determined at least partially on the basis of information related to a cruise control system in said vehicle (100).

17. The method as claimed in patent claim 16, wherein said determination of said magnitude for said lowest permitted speed $v_{min}$ is realized by said cruise control system.

18. The method as claimed in any one of patent claims 16-17, wherein said magnitude for said lowest permitted speed $v_{min}$ is related to a reference speed $v_{ref}$ which is utilized by said cruise control system.

19. The method as claimed in any one of patent claims 1-15, wherein a magnitude for said lowest permitted speed $v_{min}$ is related to a current actual speed $v_{act}$ for said vehicle (100).

20. The method as claimed in any one of patent claims 1-15, wherein a magnitude for said lowest permitted speed $v_{min}$ is altered dynamically.

21. The method as claimed in any one of patent claims 1-15, wherein a magnitude for said lowest permitted speed $v_{min}$ has different values for different transmission modes.

22. The method as claimed in any one of patent claims 1-21, wherein said choice of said transmission mode is utilized in the manual requesting of torque from an engine (101) in said vehicle (100).

23. The method as claimed in any one of patent claims 1-22, wherein said road slope is obtained from map data in combination with positioning information.

24. The method as claimed in any one of patent claims 1-23, wherein said road slope is provided by a cruise control system which utilizes map data and positioning information in controlling the speed.

25. The method as claimed in any one of patent claims 1-22, wherein said road slope corresponds to a road slope encountered by said vehicle (100) essentially at said first moment $T_1$.

26. The method as claimed in any one of patent claims 1-22, wherein said road slope has been determined on the basis of any one information type within the group:

- radar-based information;
- camera-based information;
- information obtained from a vehicle other than said vehicle (100);
- positioning information stored earlier in the vehicle (100); and
- information obtained from a traffic system related to said road section.

27. The method as claimed in any one of patent claims 1-26, wherein said simulation of each of said at least one future speed profile $v_{sim}$ is based on a driving method from within the group:

- cruise control driving;
- driving with drag torque;
- coasting;
- driving with maximum torque;
- driving according to an arbitrary torque profile; and
- pedal driving.

28. The method as claimed in any one of patent claims 1-27, wherein said choice of said transmission mode comprises a return to a lower gear position and/or return from coasting if one or more of the conditions are met from within the group:

- activation of a braking system in said vehicle;
- fall to below a threshold value for an air pressure in a braking system in said vehicle (100);
- depression, above a threshold value, of a gas pedal in said vehicle (100);
- exceeding of a threshold value for a requested engine torque in said vehicle (100);
- exceeding of a threshold value for an actual vehicle speed;
- fall to below a threshold value for an actual vehicle speed;
- fall to below a threshold value for simulated remaining time till downshift;
- fall to below a threshold value for simulated remaining time till suspension of coasting;
- requesting of drag torque by a cruise control in said vehicle (100);
- engine failure of an engine (103) in said vehicle (100);
- said lower gear position causes a highest permitted speed $v_{max}$ for the road section to be exceeded; and
- a time period $T_{app1}$ for which a current transmission mode is considered applicable is shorter than a threshold period $T_{lim}$.

29. A computer program comprising a program code, which, when said program code is executed in a computer, instructs said computer to execute the method as claimed in any one of patent claims 1-28.

30. A computer program product comprising a computer-readable medium and a computer program as claimed in patent claim 29, wherein said computer program is incorporated in said computer-readable medium.

31. A system for choosing a transmission mode in a vehicle (100) over the course of a road section, wherein a lowest permitted speed $v_{min}$, which an actual speed for said vehicle (100) should exceed, is defined for said road section; the system comprising:

- a simulation unit, arranged to simulate at least one future speed profile $v_{sim}$ for an actual speed for said vehicle (100) over the course of said road section, in which said simulation is conducted when said road section lies ahead of said vehicle (100) and in which said simulation of each of said at least one future speed profiles $v_{sim}$ is based on a road slope and on a transmission mode for said vehicle (100);
- an evaluation unit, arranged to evaluate an applicability of a transmission mode comprising coasting, said evaluation comprises a comparison of said at least one future speed profile $v_{sim}$ with a highest permitted speed $v_{max}$, below which an actual speed for said vehicle (100) should be kept, wherein said transmission mode for the respective said at least one future speed profile $v_{sim}$ is deemed applicable if the respective said at least one future speed profile $v_{sim}$ is greater than said lowest permitted speed $v_{min}$ throughout a first time period $T_{12}$, which extends from a first moment $T_1$, when said at least one simulation is conducted, to a second, later moment $T_2$; and
- a utilization unit, arranged to utilize said evaluation in said choice of a transmission mode

**characterized in that**

- said at least one future speed profile $v_{sim}$ comprises a simulated future speed profile $v_{sim-coast}$ related to coasting; and
- said evaluation unit further adapted to compare a simulated future speed profile $v_{sim-HighGear}$ related to a highest possible gear position for a gearbox (103) in said vehicle (100) with said highest permitted speed $v_{max}$; and
- determine that coasting is applicable if said future speed profile $v_{sim\_HighGear}$ related to a highest possible gear position is less than said highest permitted speed $v_{max}$ throughout a second time period $T_{13}$, in which said second time period $T_{13}$ is longer than said first time period $T_{12}$ and extends from said first moment $T_1$ to a third moment $T_3$, when said future speed profile $v_{sim\_coast}$ related to coasting falls below said lowest permitted speed $v_{min}$.

32. The system as claimed in patent claim 31, **characterized in that** said utilization unit comprises a display unit arranged to present to a driver of said vehicle (100) :

- a transmission mode for coasting if coasting has been deemed to be applicable; and otherwise
- a transmission mode for the highest gear position which has been deemed to be applicable.

**Patentansprüche**

1. Verfahren zum Auswählen eines Getriebebetriebszustands in einem Fahrzeug (100) während des Verlaufs eines Fahrbahnabschnitts, wobei eine geringste erlaubte Geschwindigkeit $v_{min}$, welche von einer tatsächlichen Geschwindigkeit des Fahrzeugs (100) überschritten werden soll, für diesen Fahrbahnabschnitt definiert ist; wobei das Verfahren umfasst:

   - Simulieren von wenigstens einem zukünftigen Geschwindigkeitsprofil $v_{sim}$ für eine tatsächliche Geschwindigkeit des Fahrzeugs (100) während des Verlaufs des Fahrbahnabschnitts, wobei das Simulieren durchgeführt wird, wenn der Fahrbahnabschnitt dem Fahrzeug (100) voraus liegt, und wobei das Simulieren von jedem der wenigstens einen zukünftigen Geschwindigkeitsprofile $v_{sim}$ auf einer Fahrbahnsteigung und einem Getriebebetriebszustand des Fahrzeugs basiert;
   - Bewerten von einer Anwendbarkeit eines Getriebebetriebszustands, wobei der Getriebebetriebszustand für das entsprechende wenigstens eine zukünftige Geschwindigkeitsprofil $v_{sim}$ für anwendbar befunden wird, wenn das entsprechende wenigstens eine zukünftige Geschwindigkeitsprofil $v_{sim}$ größer als die niedrigste erlaubte Geschwindigkeit $v_{min}$ über einen ersten Zeitraum $T_{12}$ ist, der von einem ersten Zeitpunkt $T_1$, bei dem das wenigstens eine Simulieren durchgeführt wird, zu einem späteren zweiten Zeitpunkt $T_2$ reicht, wobei der zweite Zeitpunkt $T_2$ einen Zeitpunkt bildet, so dass der erste Zeitraum $T_{12}$ einem kürzesten erlaubten Zeitraum entspricht, für den der Getriebebetriebszustand nach dem Simulieren angewandt werden soll und
   - Verwenden der Bewertung bei dem Auswählen eines Getriebebetriebszustandes, wobei
   - der bewertete Getriebebetriebszustand ein antriebskraftfreies Fahren des Fahrzeugs (100) umfasst; und
   - wobei das Bewerten einen Vergleich von dem wenigstens einen zukünftigen Geschwindigkeitsprofil $v_{sim}$ mit einer höchsten erlaubten Geschwindigkeit $v_{max}$ umfasst, unterhalb derer eine tatsächliche Geschwindigkeit des Fahrzeugs (100) gehalten werden soll,

   **dadurch gekennzeichnet, dass**

   - das wenigstens eine zukünftige Geschwindigkeitsprofil $v_{sim}$ ein simuliertes zukünftiges Geschwindigkeitsprofil $v_{sim\_coast}$ umfasst, das ein antriebskraftfreies Fahren betrifft; und
   - wobei das Bewerten einen Vergleich eines simulierten zukünftigen Geschwindigkeitsprofils $v_{sim\_HighGear}$, das sich auf eine höchste mögliche Gangposition eines Getriebes (103) in dem Fahrzeug (100) bezieht, mit der höchsten erlaubten Geschwindigkeit $v_{max}$ umfasst; und
   - ein antriebskraftfreies Fahren für anwendbar befunden wird, wenn das zukünftige Geschwindigkeitsprofil $v_{sim\_High\,Gear}$, das sich auf eine höchste mögliche Gangposition bezieht, geringer als die höchste erlaubte Geschwindigkeit $v_{max}$ über einen zweiten Zeitraum $T_{13}$ ist, wobei der zweite Zeitraum $T_{13}$ länger als der erste Zeitraum $T_{12}$ ist und von dem ersten Zeitpunkt $T_1$ zu einem dritten Zeitpunkt $T_3$ reicht, bei dem das zukünftige Geschwindigkeitsprofil $v_{sim\_coast}$, das sich auf ein antriebskraftfreies Fahren bezieht, unterhalb der geringsten erlaubte Geschwindigkeit $v_{min}$ fällt.

2. Verfahren gemäß Anspruch 1, wobei

   - der Getriebebetriebszustand zum antriebskraftfreien Fahren einen Zustand für eine Kupplung (106) in dem Fahrzeug (100) umfasst; und
   - wobei das Bewerten des Getriebebetriebszustandes ein Bewerten dahingehend umfasst, ob ein antriebskraftfreies Fahren durch ein Öffnen der Kupplung (106) für anwendbar befunden wird.

3. Verfahren gemäß Anspruch 1, wobei

   - der Getriebebetriebszustand zum antriebskraftfreien Fahren eine neutrale Gangposition für ein Getriebe (103) in dem Fahrzeug (100) umfasst; und
   - das Bewerten des Getriebebetriebszustandes ein Bewerten dahingehend umfasst, ob ein antriebskraftfreies Fahren durch einen Gangwechsel in die neutrale Gangposition für anwendbar befunden wird.

4. Verfahren nach einem der Ansprüche 1 bis 3, wobei

   - das wenigstens eine zukünftige Geschwindigkeitsprofil $v_{sim}$ ein simuliertes zukünftiges Geschwindigkeitsprofil $v_{sim\_coast}$ umfasst, das sich auf ein antriebskraftfreies Fahren bezieht;
   - das Bewerten einen Vergleich des zukünftigen Geschwindigkeitsprofils $v_{sim\_coast}$, das sich auf ein antriebskraftfreies Fahren bezieht, mit der höchsten erlaubten Geschwindigkeit $v_{max}$ umfasst; und
- ein antriebskraftfreies Fahren für anwendbar befunden wird, wenn das zukünftige Geschwindigkeitsprofil $v_{sim\_coast}$, das sich auf ein antriebskraftfreies Fahren bezieht, geringer als die höchste erlaubte Geschwindigkeit $v_{max}$ während des ersten Zeitraumes $T_{12}$ ist.

**5.** Verfahren nach einem der Ansprüche 1 bis 3, wobei

- das wenigstens eine zukünftige Geschwindigkeitsprofil $v_{sim}$ ein simuliertes zukünftiges Geschwindigkeitsprofil $v_{sim\_coast}$, umfasst, das sich auf ein antriebskraftfreies Fahren bezieht;
- das Bewerten einen Vergleich des zukünftigen Geschwindigkeitsprofils $v_{sim\_coast}$, das sich auf ein antriebskraftfreies Fahren bezieht, mit der höchsten erlaubten Geschwindigkeit $v_{max}$ umfasst; und
- ein antriebskraftfreies Fahren für anwendbar befunden wird, wenn das zukünftige Geschwindigkeitsprofil $v_{sim\_coast}$, das sich auf ein antriebskraftfreies Fahren bezieht, während einer zweiten Zeitdauer $T_{13}$ weniger als die höchste erlaubte Geschwindigkeit $v_{max}$ beträgt, wobei die zweite Zeitdauer $T_{13}$ länger als die erste Zeitdauer $T_{12}$ ist und von dem ersten Zeitpunkt $T_1$ zu einem dritten Zeitpunkt $T_3$ reicht, bei dem das zukünftige Geschwindigkeitsprofil $v_{sim\_coast}$, das sich auf ein antriebskraftfreies Fahren bezieht, unter die niedrigste erlaubte Geschwindigkeit $v_{min}$ fällt.

**6.** Verfahren nach einem der Ansprüche 1 bis 3, wobei

- das wenigstens eine zukünftige Geschwindigkeitsprofil $v_{sim}$ ein simuliertes zukünftiges Geschwindigkeitsprofil $v_{sim\_mix}$ umfasst; und
- das Bewerten einen Vergleich von dem kombinierten Geschwindigkeitsprofil $v_{sim\_mix}$ mit der höchsten erlaubten Geschwindigkeit $v_{max}$ umfasst, wobei das zukünftige kombinierte Geschwindigkeitsprofil $v_{sim\_mix}$ auf Basis eines antriebskraftfreien Fahrens während der ersten Zeitdauer $T_{12}$ simuliert wird und anschließend basierend auf einer höchstmöglichen Gangposition für einen verbleibenden Anteil des Fahrbahnabschnitts simuliert wird; und
- ein antriebskraftfreies Fahren für anwendbar befunden wird, wenn das zukünftige kombinierte Geschwindigkeitsprofil $v_{sim\_mix}$ während eines zweiten Zeitraums $T_{13}$ weniger als die höchste erlaubte Geschwindigkeit $v_{max}$ beträgt, wobei der zweite Zeitraum $T_{13}$ länger als der erste Zeitraum $T_{12}$ ist und von einem ersten Zeitpunkt $T_1$ zu einem dritten Zeitpunkt $T_3$ reicht, bei dem das zukünftige kombinierte Geschwindigkeitsprofil $v_{sim\_mix}$ unter die niedrigste erlaubte Geschwindigkeit $v_{min}$ fällt.

**7.** Verfahren nach einem der Ansprüche 5 bis 6,
wobei der dritte Zeitpunkt $T_3$ einem Ende des Fahrbahnabschnitts entspricht, wenn das zukünftige Geschwindigkeitsprofil $v_{sim}$ größer als die geringste erlaubte Geschwindigkeit $v_{min}$ während des Fahrbahnabschnittes ist.

**8.** Verfahren nach einem der Ansprüche 1 bis 7,
wobei sich eine Größe der höchsten erlaubten Geschwindigkeit $v_{max}$ auf eine Abwärtsgeschwindigkeits-Steuergeschwindigkeit $v_{dhsc}$ für das Fahrzeug (100) bezieht.

**9.** Verfahren nach einem der Ansprüche 1 bis 8,
wobei eine Größe der höchsten erlaubten Geschwindigkeit $v_{max}$ dynamisch verändert wird.

**10.** Verfahren nach einem der Ansprüche 1 bis 9,
wobei eine Größe der höchsten erlaubten Geschwindigkeit $v_{max}$ verschiedene Werte für verschiedene Getriebebetriebszustände aufweist.

**11.** Verfahren nach Anspruch 1, wobei

- der bewertete Getriebebetriebszustand eine Gangposition für ein Getriebe (103) in dem Fahrzeug (100) umfasst; und
- das Bewerten des Getriebebetriebszustandes ein Bewerten dahingehend umfasst, ob der Getriebebetriebszustand für anwendbar befunden wird.

**12.** Verfahren nach Anspruch 11,
wobei das Bewerten des Getriebebetriebszustandes ein Bewerten dahingehend darstellt, welcher Getriebebetriebszustand aus der folgenden Gruppe ausgewählt werden kann:

- ein Hochschalten;
- ein Herunterschalten; und
- ein Unterbrechen eines antriebskraftfreien Fahrens.

**13.** Verfahren nach einem der Ansprüche 1 bis 12, wobei

- das Bewerten einen Vergleich von dem wenigstens einen zukünftigen Geschwindigkeitsprofil $v_{sim}$ mit einer weiteren niedrigsten erlaubten Geschwindigkeit $v_{lim}$ umfasst, wobei die weitere niedrigste erlaubte Geschwindigkeit $v_{lim}$ höher als die geringste erlaubte Geschwindigkeit $v_{min}$ ist; und
- ein Getriebebetriebszustand für anwendbar befunden wird, wenn ein höchster Wert $v_{sim\_max}$ für das zukünftige Geschwindigkeitsprofil die weitere niedrigste erlaubte Geschwindigkeit $v_{lim}$ während eines dritten Zeitraums $T_{43}$ überschreitet, wobei der dritte Zeitraum $T_{43}$ von einem vierten Zeitpunkt $T_4$ zu einem dritten Zeitpunkt $T_3$ reicht, bei dem das zukünftige Geschwindigkeitsprofil $v_{sim}$ unterhalb einer niedrigsten erlaubten Geschwindigkeit $v_{min}$ fällt, wobei der vierte Zeitpunkt $T_4$ einem Zeitpunkt aus der folgenden Gruppe entspricht:
- dem ersten Zeitpunkt $T_1$;
- einem vorbestimmten Zeitpunkt nach dem ersten Zeitpunkt $T_1$; und
- einem Zeitpunkt, wenn eine Ableitung des zukünftigen Geschwindigkeitsprofils $v_{sim}$ zum ersten Mal positiv ist.

**14.** Verfahren nach einem der Ansprüche 1 bis 13, wobei das Auswählen eines Getriebebetriebszustandes durch eine Steuereinheit (700) in dem Fahrzeug umgesetzt wird, die folgendes auswählt:

- einen Getriebebetriebszustand für ein antriebskraftfreien Fahren, wenn ein antriebskraftfreies Fahren für anwendbar befunden wurde; und andererseits
- einen Getriebebetriebszustand für die höchste Gangposition, die für anwendbar befunden wurde.

**15.** Verfahren nach einem der Ansprüche 1 bis 13, wobei das Auswählen eines Getriebebetriebszustandes umfasst, dass eine Steuereinheit (700) in dem Fahrzeug auswählt, einem Fahrer des Fahrzeugs (100) das folgende anzuzeigen;

- einen Getriebebetriebszustand für ein antriebskraftfreien Fahren, wenn ein antriebskraftfreies Fahren für anwendbar befunden wurde; und andererseits
- einen Getriebebetriebszustand für die höchste Gangposition, die für anwendbar befunden wurde.

**16.** Verfahren nach einem der Ansprüche 1 bis 15, wobei eine Größe für die geringste erlaubte Geschwindigkeit $v_{min}$ zumindest teilweise basierend auf Informationen bestimmt wird, die ein Geschwindigkeitsregelsystem in dem Fahrzeug (100) betreffen.

**17.** Verfahren nach Anspruch 16, wobei das Bestimmen der Größe für die geringste erlaubte Geschwindigkeit $v_{min}$ durch das Geschwindigkeitsregelsystem umgesetzt wird.

**18.** Verfahren nach einem der Ansprüche 16 bis 18, wobei eine Größe für die geringste erlaubte Geschwindigkeit $v_{min}$ eine Bezugsgeschwindigkeit $v_{ref}$ betrifft, die von dem Geschwindigkeitsregelsystem verwendet wird.

**19.** Verfahren nach einem der Ansprüche 1 bis 15, wobei eine Größe für die geringste erlaubte Geschwindigkeit $v_{min}$ eine aktuelle tatsächliche Geschwindigkeit $v_{act}$ für das Fahrzeug (100) betrifft.

**20.** Verfahren nach einem der Ansprüche 1 bis 15, wobei eine Größe für die geringste erlaubte Geschwindigkeit $v_{min}$ dynamisch geändert wird.

**21.** Verfahren nach einem der Ansprüche 1 bis 15, wobei eine Größe für die geringste erlaubte Geschwindigkeit $v_{min}$ verschiedene Werte für verschiedene Getriebebetriebszustände aufweist.

**22.** Verfahren nach einem der Ansprüche 1 bis 21,

wobei das Auswählen des Getriebebetriebszustandes während des manuellen Anforderns eines Drehmoment von einem Motor (101) in dem Fahrzeug (100) verwendet wird.

23. Verfahren nach einem der Ansprüche 1 bis 22,
wobei die Fahrbahnsteigung von Kartendaten in Kombination mit Positionsinformationen erhalten wird.

24. Verfahren nach einem der Ansprüche 1 bis 23,
wobei die Fahrbahnsteigung von einem Geschwindigkeitsregelsystem bereitgestellt wird, welches Kartendaten und Positionsinformationen beim Regeln der Geschwindigkeit verwendet.

25. Verfahren nach einem der Ansprüche 1 bis 22,
wobei die Fahrbahnsteigung einer Fahrbahnsteigung entspricht, welcher das Fahrzeug (100) im Wesentlichen zu dem ersten Zeitpunkt $T_1$ ausgesetzt ist.

26. Verfahren nach einem der Ansprüche 1 bis 22,
wobei die Fahrbahnsteigung basierend auf einem Informationstyp aus der folgenden Gruppe bestimmt wurde:

- radarbasierte Informationen;
- kamerabasierte Informationen;
- Informationen, die von einem von dem Fahrzeug (100) verschiedenen Fahrzeug erhalten wurden;
- Positionsinformationen, die vorab in dem Fahrzeug (100) gespeichert wurden; und
- I nformationen, die von einem Verkehrssystem erhalten wurden, das sich auf den Fahrbahnabschnitt bezieht.

27. Verfahren nach einem der Ansprüche 1 bis 26,
wobei das Simulieren von jedem des wenigstens einen zukünftigen Geschwindigkeitsprofils $v_{sim}$ auf einem Fahrverfahren aus der folgenden Gruppe basiert:

- geschwindigkeitsgeregeltes Fahren;
- Fahren mit einem Schleppmoment;
- antriebskraftfreies Fahren;
- Fahren mit einem maximalen Drehmoment;
- Fahren gemäß einem beliebigen Drehmomentprofil; und
- Pedalfahren.

28. Verfahren nach einem der Ansprüche 1 bis 27,
wobei das Auswählen des Getriebebetriebszustandes ein Zurückkehren zu einer niedrigeren Gangposition und/oder ein Zurückkehren aus einem antriebskraftfreien Fahren umfasst, wenn wenigstens eine der Bedingungen aus der folgenden Gruppe erfüllt ist;

- Aktivieren eines Bremssystems in dem Fahrzeug;
- Unterschreiten eines Schwellenwertes für einen Luftdruck in einem Bremssystem des Fahrzeugs (100);
- Niedertreten eines Gaspedals in dem Fahrzeug (100) über einen Schwellenwert hinaus;
- Überschreiten eines Schwellenwerts für ein angefordertes Motordrehmoment in dem Fahrzeug (100);
- Überschreiten eines Schwellenwerts für eine tatsächliche Fahrzeuggeschwindigkeit;
- Unterschreiten eines Schwellenwerts für eine tatsächliche Fahrzeuggeschwindigkeit;
- Unterschreiten eines Schwellenwerts für eine simulierte verbleibende Zeit bis zu einem Herunterschalten;
- Unterschreiten eines Schwellenwerts für eine simulierte verbleibende Zeit, bis ein antriebskraftfreies Fahren beendet wird;
- Anfordern eines Schleppmoments durch eine Geschwindigkeitsregelung in dem Fahrzeug (100);
- Motorversagen eines Motors (103) in dem Fahrzeug (100);
- die niedrigere Gangposition verursacht, dass eine höchste erlaubte Geschwindigkeit $v_{max}$ für den Fahrbahnabschnitt überschritten wird; und
- ein Zeitraum $T_{appl}$, für den ein aktueller Getriebebetriebszustand für anwendbar befunden wird, ist kürzer als ein Schwellenzeitraum $T_{lim}$.

29. Computerprogramm,
das einen Programmcode umfasst, der bei einem Ausführen in einem Computer den Computer anweist, das Verfahren nach einem der Schritte 1-28 auszuführen.

**30.** Computerprogrammprodukt,
umfassend ein computerlesbares Medium und ein Computerprogramm gemäß dem Anspruch 29, wobei das Computerprogramm von dem computerlesbaren Medium umfasst ist.

**31.** Verfahren zum Auswählen eines Getriebebetriebszustands in einem Fahrzeug (100) während des Verlaufs eines Fahrbahnabschnitts, wobei eine geringste erlaubte Geschwindigkeit $v_{min}$, welche von einer tatsächlichen Geschwindigkeit des Fahrzeugs (100) überschritten werden soll, für diesen Fahrbahnabschnitt definiert ist;
wobei das System umfasst:

- eine Simuliereinheit , die dazu eingerichtet ist, wenigstens ein zukünftiges Geschwindigkeitsprofil $v_{sim}$ für eine tatsächliche Geschwindigkeit des Fahrzeugs (100) während des Verlaufs des Fahrbahnabschnitts zu simulieren, wobei das Simulieren durchgeführt wird, wenn der Fahrbahnabschnitt dem Fahrzeug (100) voraus liegt, und wobei das Simulieren von jedem der wenigstens einen zukünftigen Geschwindigkeitsprofile $v_{sim}$ auf einer Fahrbahnsteigung und einem Getriebebetriebszustand des Fahrzeugs basiert;
- eine Bewertungseinheit, die dazu eingerichtet ist, eine Anwendbarkeit eines Getriebebetriebszustands zu bewerten, der ein antriebskraftfreies Fahren umfasst, wobei das Bewerten einen Vergleich des entsprechenden wenigstens einen zukünftigen Geschwindigkeitsprofils $v_{sim}$ mit einer höchsten erlaubten Geschwindigkeit $v_{max}$ umfasst, unterhalb derer eine tatsächliche Geschwindigkeit des Fahrzeugs (100) gehalten werden soll, wobei der Getriebebetriebszustand für das entsprechende wenigstens eine zukünftige Geschwindigkeitsprofil $v_{sim}$ für anwendbar befunden wird, wenn das entsprechende wenigstens eine zukünftige Geschwindigkeitsprofils $v_{sim}$ größer als die niedrigste erlaubte Geschwindigkeit $v_{min}$ über einen ersten Zeitraum $T_{12}$ ist, der von einem ersten Zeitpunkt $T_1$, bei dem das wenigstens eine Simulieren durchgeführt wird, zu einem zweiten späteren Zeitpunkt $T_2$ reicht, wobei der zweite Zeitpunkt $T_2$ einen Zeitpunkt bildet, so dass der erste Zeitraum $T_{12}$ einem kürzesten erlaubten Zeitraum entspricht, für den der Getriebebetriebszustand nach dem Simulieren angewandt werden soll; und
- eine Verwendungseinheit, die dazu eingerichtet ist, die Bewertung bei dem Auswählen eines Getriebebetriebszustandes zu verwenden,

**dadurch gekennzeichnet, dass**

- das wenigstens eine zukünftige Geschwindigkeitsprofil $V_{sim}$ ein simuliertes zukünftiges Geschwindigkeitsprofil $V_{sim\_coast}$ umfasst, das ein antriebskraftfreies Fahren betrifft; und
- die Bewertungseinheit ferner dazu eingerichtet ist, ein simuliertes zukünftiges Geschwindigkeitsprofil $V_{sim\_HighGear}$, das sich auf eine höchste mögliche Gangposition eines Getriebes (103) in dem Fahrzeug (100) bezieht, mit der höchsten erlaubten Geschwindigkeit $V_{max}$ zu vergleichen; und
- zu bestimmen, dass ein antriebskraftfreies Fahren anwendbar ist, wenn das zukünftige Geschwindigkeitsprofil $V_{sim\_High\,Gear}$, das sich auf eine höchste mögliche Gangposition bezieht, geringer als die höchste erlaubte Geschwindigkeit $V_{max}$ über einen zweiten Zeitraum $T_{13}$ ist, wobei der zweite Zeitraum $T_{13}$ länger als der erste Zeitraum $T_{12}$ ist und von dem ersten Zeitpunkt $T_1$ zu einem dritten Zeitpunkt $T_3$ reicht, bei dem das zukünftige Geschwindigkeitsprofil $V_{sim\_coast}$, das sich auf ein antriebskraftfreies Fahren bezieht, unterhalb der geringsten erlaubte Geschwindigkeit $V_{min}$ fällt.

**32.** System nach Anspruch 31,
**dadurch gekennzeichnet, dass** die Verwendungseinheit eine Anzeigeeinheit umfasst, die derart angeordnet ist, um dem Fahrer des Fahrzeugs (100) folgendes anzuzeigen:

- einen Getriebebetriebszustand für ein antriebskraftfreies Fahren, wenn ein antriebskraftfreies Fahren für anwendbar befunden wurde; und andererseits
- einen Getriebebetriebszustand für die höchste Gangposition, die für anwendbar befunden wurde.

**Revendications**

**1.** Procédé pour choisir un mode de transmission dans un véhicule (100) au cours d'une section de route, dans lequel une vitesse la plus basse admissible $V_{min}$, qu'une vitesse effective pour ledit véhicule (100) devrait dépasser, est définie pour ladite section de route ; le procédé comprenant :

- une simulation d'au moins un profil de vitesse futur $V_{sim}$ pour une vitesse effective pour ledit véhicule (100) au cours de ladite section de route, dans lequel ladite simulation est effectuée lorsque ladite section de route se trouve en avant dudit véhicule (100), et dans lequel ladite simulation de chacun desdits au moins un profil de vitesse futur $V_{sim}$ est fonction d'une pente de route et d'un mode de transmission pour ledit véhicule ;

- une évaluation d'une applicabilité pour un mode de transmission, dans lequel ledit mode de transmission pour ledit au moins un profil de vitesse futur $V_{sim}$ respectif est estimé comme applicable si ledit au moins un profil de vitesse futur $V_{sim}$ respectif est supérieur à ladite vitesse la plus basse admissible $V_{min}$ tout au long d'une première période de temps $T_{12}$, qui s'étend depuis un premier moment $T_1$, lorsque ladite au moins une simulation est effectuée, jusqu'à un deuxième moment ultérieur $T_2$, dans lequel ledit deuxième moment $T_2$ constitue un moment tel que ladite première période de temps $T_{12}$ correspond à une plus petite période de temps admissible pendant laquelle un mode de transmission devrait être utilisé après ladite simulation ; et

- l'utilisation de ladite évaluation dans ledit choix d'un mode de transmission, dans lequel :
- ledit mode de transmission évalué comprend une marche sur l'erre dudit véhicule (100) ; et
- ladite évaluation comprend une comparaison dudit au moins un profil de vitesse futur $V_{sim}$ à une vitesse la plus haute admissible $V_{max}$, en dessous de laquelle une vitesse effective pour ledit véhicule (100) devrait être maintenue,

**caractérisé en ce que** :

- ledit au moins un profil de vitesse futur $V_{sim}$ comprend un profil de vitesse futur simulé $V_{sim\_coast}$ associé à la marche sur l'erre ; et
- ladite évaluation comprend une comparaison d'un profil de vitesse futur simulé $V_{sim\_HighGear}$ associé à une position de rapport de vitesse la plus élevée possible pour une boîte de vitesses (103) dans ledit véhicule (100) avec ladite vitesse supérieure admissible $V_{max}$ ; et
- la marche sur l'erre est estimée comme étant applicable si ledit profil de vitesse futur $V_{sim\_HighGear}$ associé à une position de rapport de vitesse la plus élevée possible est inférieur à ladite vitesse la plus haute admissible $V_{max}$ tout au long d'une deuxième période de temps $T_{13}$, dans lequel ladite deuxième période de temps $T_{13}$ est plus longue que ladite première période de temps $T_{12}$ et s'étend depuis ledit premier moment $T_1$ jusqu'à un troisième moment $T_3$, lorsque ledit profil de vitesse futur $V_{sim\_coast}$ associé à la marche sur l'erre chute en dessous de ladite vitesse la plus basse admissible $V_{min}$.

2. Procédé selon la revendication 1, dans lequel :

- ledit mode de transmission pour la marche sur l'erre comprend un état pour un embrayage (106) dans ledit véhicule (100) ; et
- ladite évaluation dudit mode de transmission comprend une évaluation du fait qu'une marche sur l'erre par une ouverture dudit embrayage (106) est estimée comme étant applicable.

3. Procédé selon la revendication 1, dans lequel :

- ledit mode de transmission pour la marche sur l'erre comprend une position de point mort pour une boîte de vitesses (103) dans ledit véhicule (100) ; et
- ladite évaluation dudit mode de transmission comprend une évaluation du fait que la marche sur l'erre par un changement de vitesses dans ladite position de point mort est estimée comme étant applicable.

4. Procédé selon l'une des revendications 1 à 3, dans lequel :

- ledit au moins un profil de vitesse futur $V_{sim}$ comprend un profil de vitesse futur simulé $V_{sim\_coast}$ associé à la marche sur l'erre ;
- ladite évaluation comprend une comparaison dudit profil de vitesse futur $V_{sim\_coast}$ associé à la marche sur l'erre et de ladite vitesse la plus haute admissible $V_{max}$ ; et
- la marche sur l'erre est estimée comme étant applicable si ledit profil de vitesse futur $V_{sim\_coast}$ associé à la marche sur l'erre est inférieur à ladite vitesse la plus haute admissible $V_{max}$ tout au long de ladite première période de temps $T_{12}$.

5. Procédé selon l'une quelconque des revendications 1 à 3, dans lequel :

- ledit au moins un profil de vitesse futur $V_{sim}$ comprend un profil de vitesse futur simulé $V_{sim\_coast}$ associé à la marche sur l'erre ;

- ladite évaluation comprend une comparaison dudit profil de vitesse futur $V_{sim\_coast}$ associé à la marche sur l'erre et de ladite vitesse la plus haute admissible $V_{max}$ ; et
- la marche sur l'erre est estimée comme étant applicable si ledit profil de vitesse futur $V_{sim\_coast}$ associé à la marche sur l'erre est inférieur à ladite vitesse la plus haute admissible $V_{max}$ tout au long d'une deuxième période de temps $T_{13}$, dans lequel ladite deuxième période de temps $T_{13}$ est plus longue que ladite première période de temps $T_{12}$ et s'étend depuis le premier moment $T_1$ jusqu'à un troisième moment $T_3$, lorsque ledit profil de vitesse futur $V_{sim\_coast}$ associé à la marche sur l'erre chute en dessous de ladite vitesse la plus basse admissible $V_{min}$.

6. Procédé selon l'une quelconque des revendications 1 à 3, dans lequel :

   - ledit au moins un profil de vitesse futur $V_{sim}$ comprend un profil de vitesse combiné futur simulé $V_{sim\_mix}$ ; et
   - ladite évaluation comprend une comparaison dudit profil de vitesse combiné futur $V_{sim\_mix}$ et de ladite vitesse la plus haute admissible $V_{max}$, dans lequel ledit profil de vitesse combiné futur $V_{sim\_mix}$ est simulé en fonction d'une marche sur l'erre durant ladite première période de temps $T_{12}$, puis est ensuite simulé en fonction d'une position de rapport de vitesse la plus élevée possible pour le reste de ladite section de route ; et
   - la marche sur l'erre est estimée comme étant applicable si ledit profil de vitesse combiné futur $V_{sim\_mix}$ est inférieur à ladite vitesse la plus haute admissible $V_{max}$ tout au long d'une deuxième période de temps $T_{13}$, dans lequel ladite deuxième période de temps $T_{13}$ est plus longue que ladite première période de temps $T_{12}$ et s'étend depuis ledit premier moment $T_1$ jusqu'à un troisième moment $T_3$, lorsque ledit profil de vitesse combiné futur $V_{sim\_mix}$ chute en dessous de ladite vitesse la plus basse admissible $V_{min}$.

7. Procédé selon l'une quelconque des revendications 5 à 6, dans lequel ledit troisième moment $T_3$ correspond à une fin de ladite section de route si ledit profil de vitesse futur $V_{sim}$ est supérieur à ladite vitesse la plus basse admissible $V_{min}$ tout au long de la section de route.

8. Procédé selon l'une quelconque des revendications 1 à 7, dans lequel une grandeur pour ladite vitesse la plus haute admissible $V_{max}$ est liée à une vitesse de commande de vitesse de pente descendante $V_{dhsc}$ pour ledit véhicule (100).

9. Procédé selon l'une quelconque des revendications 1 à 8, dans lequel une grandeur pour ladite vitesse la plus haute admissible $V_{max}$ est altérée de façon dynamique.

10. Procédé selon l'une quelconque des revendications 1 à 9, dans lequel une grandeur pour ladite vitesse la plus haute admissible $V_{max}$ a des valeurs différentes pour des modes de transmission différents.

11. Procédé selon la revendication 1, dans lequel :

    - ledit mode de transmission évalué comprend une position de rapport de vitesse pour une boîte de vitesses (103) dans ledit véhicule (100) ; et
    - ladite évaluation dudit mode de transmission comprend une évaluation du fait que ledit mode de transmission est estimé comme étant applicable.

12. Procédé selon la revendication 11, dans lequel ladite évaluation dudit mode de transmission constitue une évaluation du mode de transmission qui peut être choisi parmi le groupe comprenant :

    - un passage à une vitesse supérieure ;
    - une rétrogradation ; et
    - une suspension d'une marche sur l'erre.

13. Procédé selon l'une quelconque des revendications 1 à 12, dans lequel :

    - ladite évaluation comprend une comparaison dudit au moins un profil de vitesse futur $V_{sim}$ et d'une autre vitesse la plus basse admissible $V_{lim}$, dans lequel ladite autre vitesse la plus basse admissible $V_{lim}$ est supérieure à ladite vitesse la plus basse admissible $V_{min}$ ; et
    - un mode de transmission est estimé comme étant applicable si une valeur supérieure $V_{sim\_max}$ pour ledit profil de vitesse futur dépasse ladite autre vitesse la plus basse admissible $V_{lim}$ durant une troisième période de temps $T_{43}$, dans lequel ladite troisième période de temps $T_{43}$ s'étend depuis un quatrième moment $T_4$ jusqu'à un troisième moment $T_3$, lorsque ledit profil de vitesse futur $V_{sim}$ chute en dessous de ladite vitesse la plus

basse admissible $V_{min}$, ledit quatrième moment $T_4$ correspondant à un moment parmi le groupe comprenant :
- ledit premier moment $T_1$ ;
- un temps prédéterminé après ledit premier moment $T_1$ ; et
- un moment où une dérivée pour ledit profil de vitesse futur $V_{sim}$ pour le premier temps est positive.

**14.** Procédé selon l'une quelconque des revendications 1 à 13, dans lequel ledit choix d'un mode de transmission est réalisé par le fait qu'une unité de commande (700) dans ledit véhicule choisit :

- un mode de transmission pour la marche sur l'erre si la marche sur l'erre a été estimée comme étant applicable ; et, sinon
- un mode de transmission pour la position de rapport de vitesse la plus élevée qui a été estimée comme étant applicable.

**15.** Procédé selon l'une quelconque des revendications 1 à 13, dans lequel ledit choix d'un mode de transmission comprend le choix par une unité de commande (700) dans ledit véhicule de la présentation à un conducteur dudit véhicule (100) :

- d'un mode de transmission pour la marche sur l'erre si la marche sur l'erre a été estimée comme étant applicable ; et, sinon
- d'un mode de transmission pour la position de rapport de vitesse la plus élevée qui a été estimée comme étant applicable.

**16.** Procédé selon l'une quelconque des revendications 1 à 15, dans lequel une grandeur pour ladite vitesse la plus basse admissible $V_{min}$ est déterminée au moins partiellement en fonction d'une information associée à un système de commande de vitesse de croisière dans ledit véhicule (100).

**17.** Procédé selon la revendication 16, dans lequel ladite détermination de ladite grandeur pour ladite vitesse la plus basse admissible $V_{min}$ est réalisée par ledit système de commande de vitesse de croisière.

**18.** Procédé selon l'une quelconque des revendications 16 à 17, dans lequel ladite grandeur pour ladite vitesse la plus basse admissible $V_{min}$ est associée à une vitesse de référence $V_{ref}$ qui est utilisée par ledit système de commande de vitesse de croisière.

**19.** Procédé selon l'une quelconque des revendications 1 à 15, dans lequel une grandeur pour ladite vitesse la plus basse admissible $V_{min}$ est associée à une vitesse effective actuelle $V_{act}$ pour ledit véhicule (100).

**20.** Procédé selon l'une quelconque des revendications 1 à 15, dans lequel une grandeur pour ladite vitesse la plus basse admissible $V_{min}$ est altérée de façon dynamique.

**21.** Procédé selon l'une quelconque des revendications 1 à 15, dans lequel une grandeur pour ladite vitesse la plus basse admissible $V_{min}$ a des valeurs différentes pour des modes de transmission différents.

**22.** Procédé selon l'une quelconque des revendications 1 à 21, dans lequel ledit choix dudit mode de transmission est utilisé dans la demande manuelle de couple à partir d'un moteur (101) dans ledit véhicule (100).

**23.** Procédé selon l'une quelconque des revendications 1 à 22, dans lequel ladite pente de route est obtenue à partir de données de carte en combinaison avec une information de localisation.

**24.** Procédé selon l'une quelconque des revendications 1 à 23, dans lequel ladite pente de route est fournie par un système de commande de vitesse de croisière qui utilise des données de carte et une information de localisation pour commander la vitesse.

**25.** Procédé selon l'une quelconque des revendications 1 à 22, dans lequel ladite pente de route correspond à une pente de route rencontrée par ledit véhicule (100) essentiellement audit premier moment $T_1$.

**26.** Procédé selon l'une quelconque des revendications 1 à 22, dans lequel ladite pente de route a été déterminée en fonction d'un quelconque type d'information parmi le groupe comprenant :

- une information basée sur un radar ;
- une information basée sur une caméra ;
- une information obtenue à partir d'un véhicule autre que ledit véhicule (100) ;
- une information de localisation mémorisée précédemment dans le véhicule (100) ; et
- une information obtenue à partir d'un système de trafic associé à ladite section de route.

27. Procédé selon l'une quelconque des revendications 1 à 26, dans lequel ladite simulation de chacun desdits au moins un profil de vitesse futur $V_{sim}$ est basée sur un procédé de conduite parmi le groupe comprenant :

- une conduite par commande de vitesse de croisière ;
- une conduite avec couple de traînée ;
- une marche sur l'erre ;
- une conduite avec un couple maximal ;
- une conduite en fonction d'un profil de couple arbitraire ; et
- une conduite par pédales.

28. Procédé selon l'une quelconque des revendications 1 à 27, dans lequel ledit choix dudit mode de transmission comprend un retour à une position de rapport de vitesse inférieure et/ou un retour à partir d'une marche sur l'erre si l'une ou plusieurs des conditions sont satisfaites parmi le groupe comprenant :

- une activation d'un système de freinage dans ledit véhicule ;
- une chute en dessous d'une valeur de seuil pour une pression d'air dans un système de freinage dans ledit véhicule (100) ;
- un enfoncement, supérieur à une valeur de seuil, d'une pédale d'accélérateur dans ledit véhicule (100) ;
- un dépassement d'une valeur de seuil pour un couple moteur demandé dans ledit véhicule (100) ;
- un dépassement d'une valeur de seuil pour une vitesse de véhicule effective ;
- une chute en dessous d'une valeur de seuil pour une vitesse de véhicule effective ;
- une chute en dessous d'une valeur de seuil pour un temps restant simulé jusqu'à une rétrogradation ;
- une chute en dessous d'une valeur de seuil pour un temps restant simulé jusqu'à une suspension de marche sur l'erre ;
- une demande de couple de traînée par une commande de vitesse de croisière dans ledit véhicule (100) ;
- une défaillance de moteur d'un moteur (103) dans ledit véhicule (100) ;
- le fait que ladite position de rapport de vitesse inférieure provoque le dépassement d'une vitesse la plus haute admissible $V_{max}$ pour la section de route ; et
- le fait qu'une période de temps $T_{appl}$ pour laquelle un mode de transmission actuel est considéré comme étant applicable est plus courte qu'une période de seuil $T_{lim}$.

29. Programme informatique comprenant un code de programme qui, lorsque ledit code de programme est exécuté dans un ordinateur, ordonne audit ordinateur d'exécuter le procédé selon l'une quelconque des revendications 1 à 28.

30. Produit de programme informatique comprenant un support lisible par ordinateur et un programme informatique selon la revendication 29, dans lequel ledit programme informatique est incorporé dans ledit support lisible par ordinateur.

31. Système pour choisir un mode de transmission dans un véhicule (100) au cours d'une section de route, dans lequel une vitesse la plus basse admissible $V_{min}$, qu'une vitesse effective pour ledit véhicule (100) devrait dépasser, est définie pour ladite section de route ; le système comprenant :

- une unité de simulation, configurée de façon à simuler au moins un profil de vitesse futur $V_{sim}$ pour une vitesse effective pour ledit véhicule (100) au cours de ladite section de route, dans lequel ladite simulation est effectuée lorsque ladite section de route se trouve en avant dudit véhicule (100), et dans lequel ladite simulation de chacun desdits au moins un profil de vitesse futur $V_{sim}$ est fonction d'une pente de route et d'un mode de transmission pour ledit véhicule (100) ;
- une unité d'évaluation, configurée de façon à évaluer une applicabilité d'un mode de transmission comprenant une marche sur l'erre, ladite évaluation comprenant une comparaison dudit au moins un profil de vitesse futur $V_{sim}$ à une vitesse la plus haute admissible $V_{max}$, en dessous de laquelle une vitesse effective pour ledit véhicule (100) devrait être maintenue, dans lequel ledit mode de transmission pour ledit au moins un profil de vitesse futur respectif $V_{sim}$ est estimé comme applicable si ledit au moins un profil de vitesse futur respectif $V_{sim}$ est

supérieur à ladite vitesse la plus basse admissible $V_{min}$ tout au long d'une première période de temps $T_{12}$, qui s'étend depuis un premier moment $T_1$, lorsque ladite au moins une simulation est effectuée, jusqu'à un deuxième moment ultérieur $T_2$ ; et

- une unité d'utilisation, configurée de façon à utiliser ladite évaluation dans ledit choix d'un mode de transmission,

**caractérisé en ce que** :

- ledit au moins un profil de vitesse futur $V_{sim}$ comprend un profil de vitesse futur simulé $V_{sim\_coast}$ associé à la marche sur l'erre ; et
- ladite unité d'évaluation est de plus adaptée de façon à comparer un profil de vitesse futur simulé $V_{sim\_HighGear}$ associé à une position de rapport de vitesse la plus élevée possible pour une boîte de vitesses (103) dans ledit véhicule (100) avec ladite vitesse la plus haute admissible $V_{max}$ ; et
- il est déterminé que la marche sur l'erre est applicable si ledit profil de vitesse futur $V_{sim\_HighGear}$ associé à une position de rapport de vitesse la plus élevée possible est inférieur à ladite vitesse la plus haute admissible $V_{max}$ tout au long d'une deuxième période de temps $T_{13}$, dans lequel ladite deuxième période de temps $T_{13}$ est plus longue que ladite première période de temps $T_{12}$ et s'étend depuis ledit premier moment $T_1$ jusqu'à un troisième moment $T_3$, lorsque ledit profil de vitesse futur $V_{sim\_coast}$ associé à la marche sur l'erre chute en dessous de ladite vitesse la plus basse admissible $V_{min}$.

32. Système selon la revendication 31, **caractérisé en ce que** ladite unité d'utilisation comprend une unité d'affichage agencée de façon à présenter à un conducteur dudit véhicule (100) :

- un mode de transmission pour la marche sur l'erre si la marche sur l'erre a été estimée comme étant applicable ; et, sinon
- un mode de transmission pour la position de rapport de vitesse la plus élevée qui a été estimée comme étant applicable.

FIG. 1

$$\tfrac{1}{2}mv_2^{2}$$

$$m \cdot g \cdot h$$

$$\tfrac{1}{2}mv_1^{2}$$

FIG. 2

FIG. 3

FIG. 4

[501]

Simulation of $v_{sim}$ on the basis of a road slope and on a transmission mode

[502]

Evaluation of applicability for a transmission mode on the basis of $v_{sim}$ and $v_{min}$ throughout $T_{12}$

[503]

Choice of a transmission mode on the basis of the evaluation

Fig. 5

Fig. 6

Fig. 7

Fig. 8

Fig. 9

Fig. 10

EP 2 867 561 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010030346